# EUROPÄISCHE PATENTSCHRIFT

(11) **EP 0 698 980 B1**
(45) Veröffentlichungstag und Bekanntmachung des Hinweises auf die Patenterteilung: **20.02.2013**
(21) Anmeldenummer: 95111216.8
(22) Anmeldetag: 18.07.1995
(51) Int. Cl.: H04L 12/44, H04L 12/413

(54) **Serielles Bussystem**
Serial bus system
Système bus sériel

(30) Priorität: 24.08.1994 DE 4429953
(43) Veröffentlichungstag der Anmeldung: 28.02.1996
(60) Teilanmeldung: 03022068.5
(73) Patentinhaber: WABCO GmbH, 30453 Hannover (DE)
(72) Erfinder: Neuhaus, Detlev, D-30519 Hannover (DE); Kalter, Jochen, D-30451 Hannover (DE); Stehr, Wolfgang, D-30171 Hannover (DE); Pietsch, Frank, D-30952 Ronnenberg (DE)

(56) Entgegenhaltungen:
- EP-A- 0 374 683
- EP-A- 0 580 016
- US-A- 4 417 334
- ETSCHBERGER K ET AL: "VOM AUTO IN DIE INDUSTRIE" Juni 1990 (1990-06) , ELEKTRONIK,DE,FRANZIS VERLAG GMBH. MUNCHEN, VOL. 39, NR. 12, PAGE(S) 109-114 XP000128165 ISSN: 0013-5658 * das ganze Dokument *

## Beschreibung

Die Erfindung betrifft einen Sternkoppler gemäß dem Patentanspruch 1, der mindestens zwei Einzel-Bussysteme zu einem gesamten Bussystem miteinander verbindet.

Derartige Bussysteme sind vorbekannt durch den CAN-Normentwurf ISO/DIS 11 898 (im folgenden als "CAN-Norm" bezeichnet) oder durch die Norm ISO 11519 (VAN und CAN low speed serial data communication).

Der Nachteil dieser vorhandenen Bussysteme besteht darin, dass eine dauerhafte Störung, die z. B. aus einem Kurzschluss besteht, zum Totalausfall des gesamten Bussystems führt. Je mehr Teilnehmer an einen Bus angeschlossen sind, desto mehr Teilnehmer werden von einem Totalausfall betroffen. Ein weiterer Nachteil besteht darin, dass jeder angeschlossene Teilnehmer auch eine Störstelle darstellt, die Reflexionen verursacht. Durch die Reflexionen wird die Übertragungssicherheit auf dem Bus beeinträchtigt. Je mehr Teilnehmer am Bus angeschlossen sind, desto grösser ist diese Beeinträchtigung; so wird die Übertragungssicherheit auf dem Bus unter anderem durch die Anzahl der Teilnehmer bestimmt.

Aus der US 4,417,334 ist ein Datenverarbeitungssystem bekannt, mit einer Vielzahl von Sub-Systemen, einem ersten Stemkoppler, einem zweiten Sternkoppler und ersten und zweiten Kommunikationskanal-Paaren, die jedem der Sub-Systeme zugeordnet sind und eine Verbindung zwischen dem zugeordneten Sub-System und dem ersten und zweiten Sternkoppler herstellen. Das erste und zweite Kommunikationskanal-Paar enthalten jeweils einen ersten Kornmunikationskanal zum Hindurchlassen von Signalen von seinem zugeordneten Sub-System und jeweils einen zweiten Kommunikationskanal zum Hindurchlassen von Signalen zu seinem zugeordneten Sub-System, so dass Signale, die von irgendeinem der Sub-Systeme ausgesandt werden, entweder durch den ersten Sternkoppler oder durch den zweiten Sternkoppler geleitet werden und von allen Sub-Systemen empfangen werden können.

Aus der EP 0 374 683 A2 ist ein Bussystem mit Sternkopplern bekannt, welches einen Konfliktlösemechanismus für konkurrierende Buszugriffe aufweist, wobei durch perfekte Zeitplanung Kollisionen zwischen Paketen einer Gruppe von Schaltungseinheiten, die Ober einen Kommunikationsbus miteinander verbunden sind, vermieden werden. Der Konfliktlösamechanismus enthält ein in zwei Phasen ablaufendes Verfahren, wobei in der ersten Phase Schaltungseinheiten mit der höchsten Priorität und einem real zu übertragenden Datenpaket in eine zweite Phase übergehen, wo ein Zeiger benutzt wird, um eine dieser Schaltungseinheiten als Gesamtsieger des Wettbewerbs zu erklären. Diese Schaltungseinheit überträgt dann ihr Datenpaket und während einer nachfolgenden Paketübertragungsperiode.

Aus der EP 0 580 016 A2 ist ein Bussystem für ein lokales Operationsnetzwerk bekannt, bei dem die von einem Teilnehmer ausgesendete Nachricht über einen zentralen Sternkoppler zu allen Teilnehmern geleitet wird. Hierbei wird durch einen Rahmentaktgenerator ein Rahmentakt erzeugt und zum zentralen Sternkoppler gesendet, wobei die zeitliche Abfolge der Datenrahmen des Rahmentaktes im zentralen Sternkoppler einen weiteren Referenzrahmentakt definiert. Die weiteren Teilnehmer des lokalen Operationsnetzwerks bestimmen einen individuellen Rahmensendetakt, derart, dass die jeweils von einem bestimmten Teilnehmergesendete Nachricht unter Berücksichtigung der Signallaufzeit zum zentralen Sternkoppler und zu dem Zeitpunkt relativ zum Referenzrahmentakt eintrifft, zu dem diese Nachricht in den im zentralen Sternkoppler vorliegenden Datenrahmen aufzunehmen ist.

Der Erfindung liegt deshalb die Aufgabe zugrunde, ein Bussystem der eingangs genannten Art zu schaffen, das die erwähnten Nachteile des Standes der Technik vermeidet.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung wird im folgenden anhand eines Ausführungsbeispiels, das in den Zeichnungen dargestellt ist, unter Verwendung des CAN-Protokolls näher erläutert.

Dabei zeigt
- Fig. 1: das Blockschaltbild eines Sternkopplers für sechs Einzel-Bussysteme entsprechend der CAN-Norm unter Verwendung von drei T-Treibern,
- Fig. 2: das Blockschaltbild eines T-Treibers,
- Fig. 3: die Logik-Einheit in einem T-Treiber,
- Fig. 4a: die statischen Maßnahmen zur Rückkopplungs-Unterdrückung in einem T-Treiber,
- Fig. 4b-d: die logischen Zustände in der Rückkopplungsunterdrückung nach Fig. 4a,
- Fig. 5: statische und dynamische Maßnahmen zur Rückkopplungsunterdrückung in einem T-Treiber,
- Fig. 6a: Symbol der Baugruppe "logisch 1-Verzögerung",
- Fig. 6b: Aufbau der Baugruppe "logisch 1-Verzögerung",
- Fig. 6c: Zeitdiagramm der Baugruppe "logisch 1-Verzögerung"

Der Eindeutigkeit wegen wird in der Beschreibung der Erfindung auf Bezeichnungen im CAN-Normentwurf ISO/DIS 11898 zurückgegriffen.

Die unten beschriebenen Schaltungsteile sind zum überwiegenden Teil aus elektronischen Logik-Schaltelementen, wie UND-Gliedern, ODER-Gliedern oder Invertern aufgebaut. Bei diesen Schaltelementen werden an ihrem Eingang bzw. ihren Eingängen Spannungs-Pegel angelegt, die einem logisch 0- bzw. logisch 1-Zustand entsprechen. Bei dem hier erläuterten Ausführungsbeispiel der Erfindung ist eine positive Logik zugrundegelegt, bei der ein niederer Spannungspegel (meist im Bereich von Null Volt) dem Zustand log.0 und ein hoher Spannungspegel (meist im Bereich der Versorgungsspannung) dem Zustand log.1 zugeordnet ist. In der Beschreibung der Erfindung wird dargelegt, wie die logischen Schaltelemente miteinander verknüpft sind und welche logischen Zustände an ihren Eingängen anliegen. Mit der Festlegung der logischen Zustände an den Eingängen eines Logik-Schaltelements und der Festlegung der Funktion des Schaltelements ergibt sich der logische Zustand am Ausgang dieses Schaltelements aus seiner Funktion und den bekannten Gesetzen der Boole'schen Algebra. Besteht das Logik-Schaltglied beispielsweise aus einem UND-Glied, so weist der Ausgang des UND-Gliedes dann und nur dann den log.1-Zustand auf, wenn alle seine Eingänge in den Zustand log.1 gesetzt sind. Weist nur einer der Eingänge den Zustand log.0 auf, so ist der Ausgang des UND-Gliedes auf log.0 gesetzt.

Die Erfindung ist jedoch nicht begrenzt auf die Verwendung von Logik-Schaltelementen mit Spannungs-Pegeln in Positiv-Logik. Alternativ können z. B. Logik-Schaltelemente mit Strom-Pegeln Verwendung finden; auch kann statt einer Positiv-Logik eine Negativ-Logik eingesetzt werden. Die physikalischen Pegel ergeben sich entsprechend der gewählten Technologie.

In gleicher Weise ist die Erfindung nicht begrenzt auf die unten beschriebene Technologie der Bus-Treiber und Bus-Empfänger entsprechend der CAN-Norm. Bei anderen Technologien ergeben sich sinngemäß andere physikalische Pegel auf dem Bus, welcher das Übertragungsmedium darstellt.

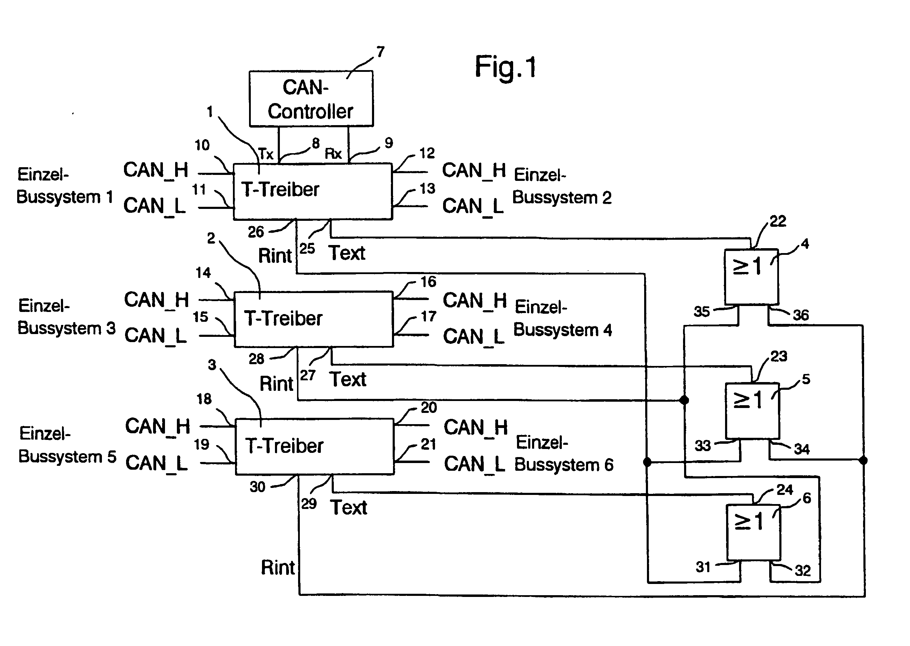

In Fig. 1 sind drei T-Treiber (1, 2, 3) dargestellt, wobei der T-Treiber (1) mit Einzel-Bussystemen 1 und 2, der T-Treiber (2) mit Einzel-Bussystemen 3 und 4 und der T-Treiber (3) mit Einzel-Bussystemen 5 und 6 verbunden ist. Der T-Treiber (1) ist mit dem Einzel-Bussystem 1 über einen ersten Ein-/Ausgang (10) (Signal "CAN_H") und einen zweiten Ein-/Ausgang (11) (Signal "CAN_L") und mit dem Einzel-Bussystem 2 über einen dritten Ein-/Ausgang (12) (Signal "CAN_H") und einen vierten Ein-/Ausgang (13) (Signal "CAN_L") verbunden. In gleicher Weise sind der T-Treiber (2) mit dem Einzel-Bussystem 3 über einen ersten und zweiten Ein-/Ausgang (14, 15) und mit dem Einzel-Bussystem 4 über einen dritten und vierten Ein-/Ausgang (16, 17), sowie der T-Treiber (3) mit dem Einzel-Bussystem 5 über einen ersten und zweiten Ein-/Ausgang (18, 19) und mit dem Einzel-Bussystem 6 über einen dritten und vierten Ein-/Ausgang (20, 21) verbunden.

Jedes Einzel-Bussystem stellt ein Bussystem nach der CAN-Norm dar. Für jedes Einzel-Bussystem ist eine Busleitung vorhanden, die aus 2 Leitern besteht, auf denen die Pegel der Signale "CAN_H" und "CAN_L" übertragen werden.

Zur Verbindung der T-Treiber (1, 2, 3) untereinander sind drei logische ODER-Glieder (4, 5, 6) vorgesehen. Der Ausgang (22) des ODER-Gliedes (4) ist mit einem fünften Eingang (25) (Signal "Text" des T-Treibers (1)) verbunden, der Ausgang (23) des ODER-Gliedes (5) ist mit einem fünften Eingang (27) des T-Treibers (2) verbunden und der Ausgang (24) des ODER-Gliedes (6) ist mit einem fünften Eingang (29) des T-Treibers (3) verbunden. Ein erster Eingang (31) des ODER-Gliedes (6) ist mit einem sechsten Ausgang (26) des T-Treibers (1) (Signal "Rint") und ein zweiter Eingang (32) des ODER-Gliedes (6) ist mit einem sechsten Ausgang (28) des T-Treibers (2) verbunden. In gleicher Weise sind der erste und zweite Eingang (33, 34) des ODER-Gliedes (5) mit dem sechsten Ausgang (26) des T-Treibers (1) und einem sechsten Ausgang (30) des T-Treibers (3) sowie der erste und zweite Eingang (35, 36) des ODER-Gliedes (4) mit dem sechsten Ausgang (28) des T-Treibers (2) und dem sechsten Ausgang (30) des T-Treibers (3) verbunden.

Der T-Treiber (1) ist außerdem mit einem CAN-Controller (7) über einen siebten Eingang (8) (Signal "Tx") und einen achten Ausgang (9) (Signal "Rx") verbunden.

Der CAN-Controller (7) stellt eine übliche Steuereinheit für einen Bus nach der CAN-Norm dar. In normalen Anwendungen steuert ein CAN-Controller mit Hilfe von mindestens zwei Steuersignalen (8, 9), die üblicherweise mit "Rx" und "Tx" bezeichnet werden, den Datenverkehr auf dem Bus. Bei der erfindungsgemäßen Lösung steuert der CAN-Controller (7), der aus einem beliebigen handelsüblichen CAN-Controller (z. B. Intel-Typ 87CI96CA "Advanced 16-bit CHMOS Microcontroller with integrated CAN 2.0") bestehen kann, eine Vielzahl von Einzel-Bussystemen. Im Ausführungsbeispiel nach Fig. 1 sind drei T-Treiber für je zwei Einzel-Bussysteme vorhanden, so daß in diesem Ausführungsbeispiel sechs Einzel-Bussysteme von dem CAN-Controller (7) gesteuert werden. Der CAN-Controller (7) wird an einen der T-Treiber angeschlossen, im Ausführungsbeispiel nach Fig. 1 ist dies, wie oben erläutert, der T-Treiber (1), dessen siebte und achte Anschlüsse (8, 9) mit der Verbindung zum CAN-Controller (7) belegt werden, wodurch er unter den sonst gleichwertigen T-Treibern (1, 2, 3) eine Art Sonderrolle spielt.

Außer dieser Sonderrolle des T-Treibers (1) sind alle T-Treiber (1, 2, 3) funktionell gleichrangig. Durch die Verschaltung der T-Treiber (1, 2, 3) untereinander bei Verwendung der ODER-Glieder (4, 5, 6) wird ein serielles Bussystem geschaffen, das nach dem in der CAN-Norm üblichen Carrier-Sense-Multiple-Access-Zugriffsverfahren (CSMA) mit bitweiser Arbitrierung arbeitet und das aus sechs Einzel-Bussystemen besteht, die an einen Sternkoppler angeschlossen sind, der in diesem Falle aus den drei T-Treibern (1, 2, 3) besteht. Wie weiter unten erläutert wird, findet im gesamten Bussystem eine Arbitrierung statt, bei der alle angeschlossenen Einzel-Bussysteme einbezogen werden. Die hierzu erforderlichen Maßnahmen werden ebenfalls weiter unten beschrieben.

Jeder der in den Sternkoppler einbezogenen T-Treiber (1, 2, 3) erzeugt unter bestimmten Bedingungen an seinem sechsten Ausgang (26, 28, 30) ein logisches 1-Signal (Signal "Rint"). Jeder der T-Treiber (1, 2, 3) kann auch an seinen fünften Eingängen (25, 27, 29) ein Eingangssignal (Signal "Text") empfangen. Die ODER-Glieder (4, 5, 6) haben die Wirkung, daß immer dann ein Signal "Text" = logisch 1 an alle T-Treiber (1, 2, 3) gegeben wird, wenn das Signal "Rint" von mindestens einem der T-Treiber (1, 2, 3) auf log.1 steht.

Die Konfiguration aus drei T-Treibern (1, 2, 3) und vier ODER-Gliedern (4, 5, 6) nach Fig. 1 kann beliebig in eine Struktur eines Sternkopplers mit n (d. h. beliebig vielen) T-Treibern erweitert werden, wenn man n T-Treiber vorsieht und zur Verkopplung der T-Treiber untereinander n ODER-Glieder mit je n - 1 Eingängen verwendet. Die Verkopplung der n T-Treiber mit den n ODER-Gliedern erfolgt dann in sinngemäßer Erweiterung der am Beispiel eines Sternkopplers mit drei T-Treibern und 3 ODER-Gliedern nach Fig. 1 erläuterten Verkopplung.

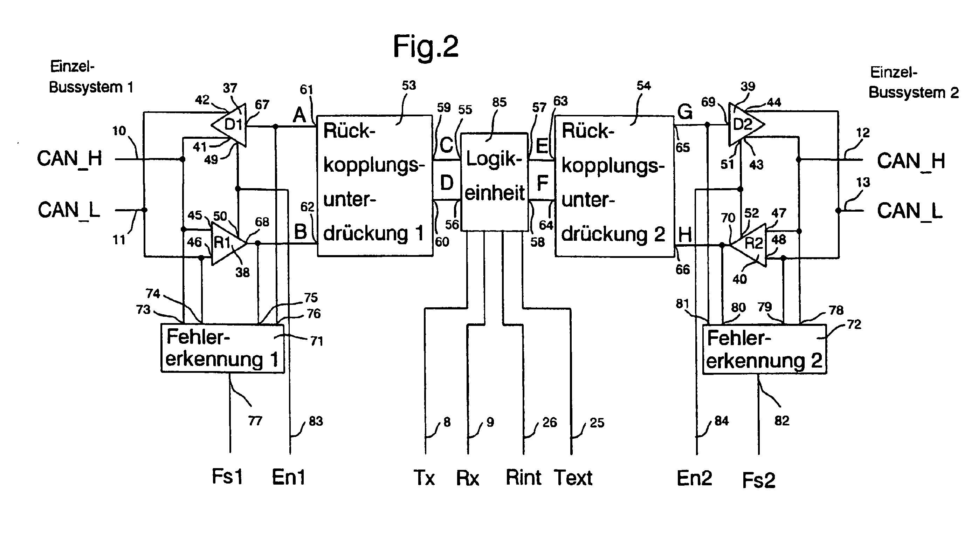

Fig. 2 zeigt den T-Treiber (1) aus Fig. 1 mit seinen Anschlüssen.

Die ersten und zweiten Ein-/Ausgänge (10, 11) sind mit Einzel-Bussystem 1 und die dritten und vierten Ein-/Ausgänge (12, 13) mit Einzel-Bussystem 2 verbunden. Ein fünfter Eingang (25) und ein sechster Ausgang (26) sind, wie bereits erläutert, mit den in Fig. 1 dargestellten ODER-Gliedern (4, 5, 6) verbunden. Wie ebenfalls bereits erläutert, führen der siebte Eingang (8) und der achte Ausgang (9), wie in Fig. 1 dargestellt, zum CAN-Controller (7).

Für jedes der am T-Treiber angeschlossenen Einzel-Bussysteme sind ein als Sendeeinheit wirkender Bus-Treiber und ein als Empfangseinheit wirkender Bus-Empfänger vorgesehen. Für das Einzel-Bussystem 1 sind dies der Bus-Treiber (37) und der Bus-Empfänger (38), für das Einzel-Bussystem 2 der Bus-Treiber (39) und der Bus-Empfänger (40). Jeder Bus-Treiber verfügt über einen ersten und zweiten Ausgang; für den Bus-Treiber (37) stellt der Ausgang (41) den ersten Ausgang und der Ausgang (42) den zweiten Ausgang dar. In gleicher Weise stellen die Ausgänge (43, 44) die ersten und zweiten Ausgänge des Bus-Treibers (39) dar.

Jeder Bus-Empfänger verfügt über einen ersten und einen zweiten Eingang; für den Bus-Empfänger (38) sind dies der erste Eingang (45) und der zweite Eingang (46) und für den Bus-Empfänger (40) die Eingänge (47) und (48).

Die ersten und zweiten Ausgänge eines Bus-Treibers sind entsprechend ihrer Zuordnung zu dem jeweiligen Einzel-Bussystem mit den ersten und zweiten Ein-/Ausgängen des zugehörigen T-Treibers und den ersten und zweiten Eingängen des zugehörigen Bus-Empfängers verbunden. So ist der erste Ausgang (41) des Bus-Treibers (37) mit dem ersten Ein-/Ausgang (10) des T-Treibers zum Einzel-Bussystem 1 und dem ersten Eingang (45) des Bus-Empfängers (38) verbunden. Der zweite Ausgang (42) des Bus-Treibers (37) ist mit dem zweiten Ein-/Ausgang (11) des T-Treibers zum Einzel-Bussystem 1 und dem zweiten Eingang (46) des Bus-Empfängers (38) verbunden.

In gleicher Weise sind die ersten und zweiten Ausgänge (43, 44) des Bus-Treibers (39) mit den dritten und vierten Ein-/Ausgängen (12, 13) des T-Treibers zum Einzel-Bussystem 2 und den ersten und zweiten Eingängen (47, 48) des Bus-Empfängers (40) verbunden.

Jeder Bus-Treiber und jeder Bus-Empfänger verfügt über einen Steuereingang. Für den Bus-Treiber (37) ist dies der Steuereingang (49), für den Bus-Treiber (39) der Steuereingang (51), für den Bus-Empfänger (38) der Steuereingang (50) und für den Bus-Empfänger (40) der Steuereingang (52).

Steuereingang (49) ist mit Steuereingang (50) verbunden, wobei dieses verbundene Signal als gemeinsames Steuersignal (83) (Signal "En1") für den Bus-Treiber (37) und den Bus-Empfänger (38) dient, welche beide dem Einzel-Bussystem 1 zugeordnet sind. Unter Verwendung des Steuersignals (83) können also die Bus-Treiber- wie die Bus-Empfänger-Funktionen für das Einzel-Bussystem 1 gemeinsam gesteuert werden. Für die gemeinsame Steuerung dieser Funktionen ist nur das eine Steuersignal (83) erforderlich.

In gleicher Weise sind die Steuersignale (51, 52) zu einem gemeinsamen Steuersignal (84) verbunden, welches zur gemeinsamen Steuerung der dem Einzel-Bussystem 2 zugeordneten Einheiten, nämlich Bus-Treiber (39) und Bus-Empfänger (40) dient.

Mit Hilfe der Steuersignale (83, 84) kann Einzelbus-System 1 oder 2 ein- bzw. abgeschaltet werden. Ein log.1-Pegel am Eingang (83, 84) der Steuersignale schaltet das betreffende Einzel-Bussystem ein ("Enable"-Funktion an Bus-Treiber wie Bus-Empfänger). Ein log.0-Pegel schaltet das betreffende Einzel-Bussystem ab ("Disable"-Funktion an Bus-Treiber wie Bus-Empfänger).

Das Zu- bzw. Abschalten eines Einzel-Bussystems mit Hilfe der Steuersignale (83, 84) beeinflußt nicht die anderen Einzel-Bussysteme des Sternkopplers, d. h. der Datenverkehr inclusive des Arbitrierungsmechanismus findet an diesen anderen Einzel-Bussystemen ungehindert statt, während das eine Einzel-Bussystem zu- oder abgeschaltet wird. Aus diesem Grund kann zu jedem beliebigen Zeitpunkt ein Einzel-Bussystem zu- bzw. abgeschaltet werden, ohne daß die Gefahr einer Beeinträchtigung des Datenverkehrs auf den anderen Einzel-Bussystemen des Sternkopplers besteht.

Weiter unten wird eine Einrichtung (71, 72) zur Erkennung von dauerhaften Fehlern auf einem Einzel-Bussystem beschrieben.

Es besteht die vorteilhafte Möglichkeit, die Fehler dieser Fehlererkennungs-Einrichtung zu nutzen, indem in allen Fällen, in denen ein Einzel-Bussystem fehlerfrei arbeitet, dieses Einzel-Bussystem mit Hilfe des Steuersignals (83, 84) zugeschaltet wird. Im umgekehrten Fall wird bei Feststellung eines dauerhaften Fehlers das betreffende Einzel-Bussystem mit Hilfe des Steuersignals (83, 84) abgeschaltet.

Zusätzlich zu den bisher erwähnten Signalen verfügen alle Bus-Treiber über einen Eingang und alle Bus-Empfänger über einen Ausgang. Der Eingang für Bus-Treiber (37) besteht aus Eingang (67) (Signal "A"), der Eingang von Bus-Treiber (39) aus dem Eingang (69) (Signal "G"), der Ausgang von Bus-Empfänger (38) aus dem Ausgang (68) (Signal "B") und der Ausgang von Bus-Empfänger (40) aus dem Ausgang (70) (Signal "H").

Für jedes Einzel-Bussystem ist eine Einrichtung zur Erkennung von Fehlern vorgesehen. Für Einzel-Bussystem 1 ist dies die Fehlererkennung 1 (71) und für Einzel-Bussystem 2 die Fehlererkennung 2 (72). Eine Fehlererkennungseinrichtung verfügt über erste Einrichtungen zur Messung der Spannungspegel auf den Bus-Leitungen des ihr zugeordneten Einzel-Bussystems. Sie verfügt weiter über zweite Einrichtungen zur Messung des Logik-Pegels am Eingang des entsprechenden Bus-Treibers und über dritte Einrichtungen zur Messung des Logik-Pegels am Ausgang des entsprechenden Bus-Empfängers. Zusammengenommen verfügt sie daher über vier Eingänge und einen Fehlerausgang. Fehlererkennung 1 (71) weist folgende Verbindungen auf: erster Eingang (73) zu dem ersten Ein-/Ausgang (10) des T-Treibers (1),
zweiter Eingang (74) zu zweitem Ein-/Ausgang (11) des T-Treibers (1),
dritter Eingang (75) zu Ausgang (68) des Bus-Empfängers (38),
vierter Eingang (76) zu Eingang (67) des Bus-Treibers (37).

In gleicher Weise sind die Eingänge (78, 79, 80, 81) der Fehlererkennung 2 (72) mit den Leitungen (12, 13, 70, 69) verbunden. Der Fehler-Ausgang (77) (Signal "Fs1") der Fehlererkennung 1 (71) führt zu einer nicht dargestellten Verarbeitungseinheit für Fehler auf Einzel-Bussystem 1 und Fehler-Ausgang (82) (Signal "Fs2") der Fehlererkennung 2 (72) führt zu einer ebenfalls nicht dargestellten Verarbeitungseinheit für Fehler auf Einzel-Bussystem 2. Da Fehlererkennung 1 (71) und Fehlererkennung 2 (72) völlig symmetrisch aufgebaut sind, wirken sie in gleicher Art und Weise; ihre Funktion wird beispielhaft anhand der Fehlererkennung 1 (71) entsprechend Fig. 2 erläutert.

Fehlererkennung 1 (71) liest die Spannungspegel auf ihren vier Eingängen (73, 74, 75, 76) ein und stellt aufgrund von Vergleichen fest, ob auf dem ihr zugeordneten Einzel-Bussystem 1 erkennbare Fehler vorhanden sind.

Aufgrund der Spannungspegel an ihren ersten und zweiten Eingängen (73, 74) stellt die Fehlererkennung (71) fest, ob die Spannungspegel am Einzel-Bussystem 1 innerhalb des zugelassenen Toleranzbereiches liegen. Liegen die Pegel außerhalb des entsprechend der CAN-Norm zugelassenen Toleranzbereiches, so liegt ein dauerhafter Fehler vor.

Fehlererkennung 1 (71) prüft weiter den Zustand der Busleitung für Einzel-Bussystem 1 und vergleicht ihn mit dem Eingang des entsprechenden Bus-Treibers und dem Ausgang des entsprechenden Bus-Empfängers.

Liegt der Pegel des Einganges (67) für Bus-Treiber (37) auf log.1, so müssen die Spannungspegel am ersten und zweiten Eingang der Fehlererkennung 1 (71) dem Zustand "dominant" entsprechen; ist der Zustand dagegen "rezessiv", so liegt mutmaßlich ein Fehler im Bereich des Einzel-Bussystems 1 vor. Der letztere Fall zeigt an, daß Daten, die man aufgrund des log.1-Zustandes am Eingang (67) des Bus-Treibers (37) erwarten mußte, ausgeblieben sind.

Bei allen erwähnten Fehlerzuständen setzt die Fehlererkennung 1 (71) den Ausgang (77) auf log.1; im Falle, daß kein Fehler vorliegt, wird der Ausgang (77) auf log.0 gesetzt.

Für jedes Einzel-Bussystem ist eine Rückkopplungsunterdrückung vorgesehen. Für das Einzel-Bussystem 1 ist dies die Rückkopplungsunterdrückung 1 (53) und für das Einzel-Bussystem 2 die Rückkopplungsunterdrückung 2 (54). Zur logischen Verkopplung von Einzel-Bussystemen 1 und Einzel-Bussystem 2 ist eine Logikeinheit (85) vorgesehen. Im Zusammenhang der Erläuterungen zu Fig. 1 wurden bereits die folgenden Signale des T-Treibers (1) erklärt: Fünfter Eingang (25), sechster Ausgang (26), siebter Eingang (8) und achter Ausgang (9). Diese Signale stellen Eingangssignale bzw. Ausgangssignale der Logikeinheit (85) dar, die eine Teilschaltung des T-Treibers (1) ist; im einzelnen stellen der fünfte und siebte Eingang (25, 8) des T-Treibers (1) nach Fig. 1 die ersten und zweiten Eingänge der Logikeinheit (85) nach Fig. 2 und die sechsten und achten Ausgänge (26, 9) des T-Treibers (1) nach Fig. 1 die ersten und zweiten Ausgänge der Logikeinheit (85) nach Fig. 1 dar.

Die Logikeinheit (85) verfügt im weiteren über einen dritten Ausgang (55) (Signal "C"), einen dritten Eingang (56) (Signal "D"), einen vierten Ausgang (57) (Signal "E") und einen vierten Eingang (58) (Signal "F").

Zwischen der Logikeinheit (85) und der Anordnung von Bus-Treiber (37) und Bus-Empfänger (38) für Einzel-Bussystem 1 ist der Schaltungsteil Rückkopplungsunterdrückung 1 (53) eingefügt. In gleicher Weise ist zwischen der Logikeinheit (85) und den dem Einzel-Bussystem 2 zugeordneten Bus-Treiber und Bus-Empfänger (39, 40) der Schaltungsteil Rückkopplungsunterdrückung 2 (54) eingefügt. Es besteht daher eine völlige Symmetrie der Teilschaltungen (53, 37, 38), die dem Einzel-Bussystem 1 zugeordnet sind zu den dem Einzel-Bussystem 2 zugeordneten Teilschaltungen (54, 39, 40); der innere Aufbau von sich entsprechenden Teilschaltungen ist identisch.

Beide Rückkopplungsunterdrückungen (53, 54) verfügen über je zwei Eingänge und je zwei Ausgänge. Die Rückkopplungsunterdrückung 1 (53) ist mit der Logikeinheit (85) und mit den dem Einzel-Bussystem 1 zugeordneten Bus-Treiber und Bus-Empfänger über die folgenden Verbindungen verbunden: Erster Eingang (59) mit drittem Ausgang (55) der Logikeinheit (85) (Signal "C"), erster Ausgang (60) mit Eingang (56) der Logikeinheit (85) (Signal "D"), zweiter Ausgang (61) mit Eingang (67) des Bustreibers (37) (Signal "A") und zweiter Eingang (62) mit Ausgang (68) des Bus-Empfängers (38) (Signal "B"). In gleicher Weise sind die Eingänge und Ausgänge der Rückkopplungsunterdrückung 2 (54) (63, 64, 65, 66) mit den Eingängen und Ausgängen (57, 58, 69, 70) verbunden.

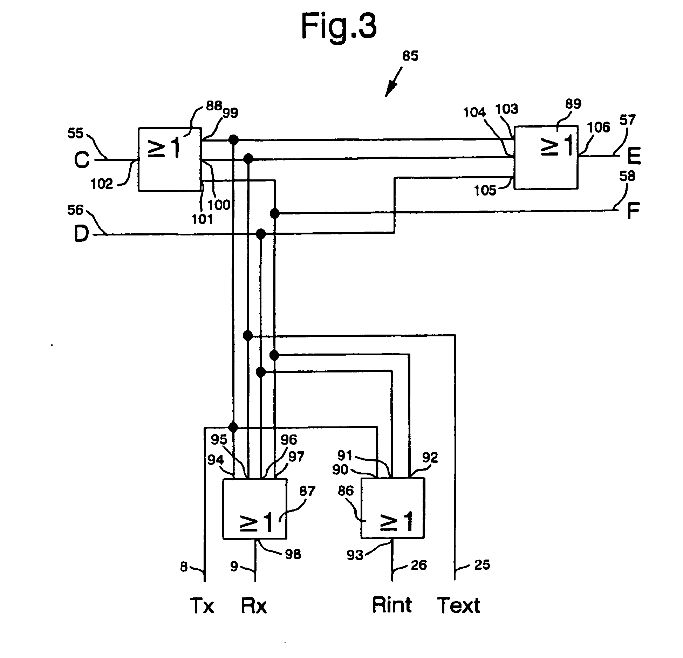

Fig. 3 zeigt die Logikeinheit (85) für T-Treiber (1) mit folgenden Signalen, die bereits im Zusammenhang mit der Beschreibung des T-Treibers (1) erwähnt wurden:
erster Eingang (25) [= fünfter Eingang des T-Treibers (1) (Signal "Text")],
zweiter Eingang (8) [= siebter Eingang des T-Treibers (1), (Signal "Tx")],
dritter Eingang (56), (Signal "D"),
vierter Eingang (58), (Signal "F"),
erster Ausgang (26) [= sechster Ausgang des T-Treibers (1),(Signal "Rint")],
zweiter Ausgang (9) [= achter Ausgang des T-Treibers (1), (Signal "Rx")],
dritter Ausgang (55),(Signal "C"),
vierter Ausgang (57) (Signal "E").

Die Logikeinheit (85) ist aus vier miteinander verschalteten ODER-Gliedern aufgebaut, wobei drei ODER-Glieder je drei und ein ODER-Glied vier Eingänge aufweist.

Das erste ODER-Glied (86) verfügt über einen ersten Eingang (90), einen zweiten Eingang (91), einen dritten Eingang (92) und einen Ausgang (93), welcher den ersten Ausgang (26) (Signal "Rint") der Logikeinheit (85) darstellt. Das zweite ODER-Glied (87) verfügt über einen ersten Eingang (94), einen zweiten Eingang (95), einen dritten Eingang (96), einen vierten Eingang (97) und einen Ausgang (98), welcher den zweiten Ausgang (9) (Signal "Rx") der Logikeinheit (85) darstellt. Das dritte ODER-Glied (88) verfügt über einen ersten Eingang (99), einen zweiten Eingang (100), einen dritten Eingang (101) und einen Ausgang (102), welcher den dritten Ausgang (55) (Signal "C") der Logikeinheit (85) darstellt. Das vierte ODER-Glied (89) verfügt über einen ersten Eingang (103), einen zweiten Eingang (104), einen dritten Eingang (105) und einen Ausgang (106), welcher den vierten Ausgang (57)(Signal "E") der Logikeinheit (85) darstellt.

Die ersten Eingänge (94, 99, 103) der zweiten, dritten und vierten ODER-Glieder (87, 88, 89) sind miteinander verbunden und stellen den zweiten Eingang (8) (Signal "Tx") der Logikeinheit (85) dar. Die zweiten Eingänge (95, 100, 104) der zweiten, dritten und vierten ODER-Glieder (87, 88, 89) sind miteinander verbunden und stellen den ersten Eingang (25) (Signal "Text") der Logikeinheit (85) dar. Der dritte Eingang (56) (Signal "D") der Logikeinheit (85) ist mit dem zweiten Eingang (91) des ersten ODER-Gliedes (86) und den dritten Eingängen (96, 105) des zweiten und vierten ODER-Gliedes (87, 89) verbunden. Der vierte Eingang (58) (Signal "F") der Logikeinheit (85) ist mit dem vierten Eingang (97) des zweiten ODER-Gliedes (87) und den dritten Eingängen (92, 101) des ersten und dritten ODER-Gliedes (86, 88) verbunden.

Für die folgenden Erläuterungen wird zunächst angenommen, daß die in Fig. 2 dargestellten Rückkopplungsunterdrückung 1 (53) und Rückkopplungsunterdrückung 2 (54) aus je zwei durchgehenden Verbindungen bestehen. Bei Rückkopplungsunterdrückung 1 (53) besteht dann eine durchgehende Verbindung zwischen dem ersten Eingang (59) und dem zweiten Ausgang (61) und eine durchgehende Verbindung zwischen dem zweiten Eingang (62) und dem ersten Ausgang (60); in gleicher Weise sind bei der Rückkopplungsunterdrückung 2 (54) die Ein- und Ausgänge (63, 65) und (66, 64) durchgehend verbunden. Mit dieser durchgehenden Verbindung steuert der dritte Ausgang (55) der Logikeinheit (85) direkt den Eingang (67) des Bus-Treibers (37) für das Einzel-Bussystem 1 an. Dies bedeutet, daß ein log.1-Pegel am Ausgang (55) der Logikeinheit (85) zur Folge hat, daß sich entsprechend der CAN-Norm auf den ersten und zweiten Ausgängen (41, 42) des Bus-Treibers (37) Spannungspegel einstellen, die dem Zustand "dominant" entsprechen. Der Bus-Empfänger (38) wandelt Pegel vom Typ "dominant" an seinen ersten und zweiten Eingängen (45, 46) derart um, daß an seinem Ausgang (68) ein log.1-Pegel erscheint. Dieser log.1-Pegel wird über die oben erwähnte durchgehende Verbindung zum dritten Eingang (56) der Logikeinheit (85) übertragen.

Entsprechen die Pegel der Eingänge (45, 46) des Bus-Empfängers (38) dem Zustand "rezessiv", dann erscheint am Ausgang (68) des Bus-Empfängers (38) ein log.0-Pegel, der dann ebenfalls zum dritten Eingang (56) der Logikeinheit (85) übertragen wird.

Durch den symmetrischen Aufbau erzeugt in gleicher Weise ein log.1-Pegel am vierten Ausgang (57) der Logikeinheit auf dem Einzel-Bussystem 2 den Zustand "dominant"; analog zu dem vorher Gesagten erscheint bei Vorliegen eines Zustandes "dominant" auf dem Einzel-Bussystem 2 ein log.1-Pegel am vierten Eingang (58) der Logikeinheit (85).

Zusammenfassend kann gesagt werden, daß der dritte Ausgang (55) (Signal "C") der Logikeinheit (85) den Zustand auf Einzel-Bussystem 1 und der vierte Ausgang (57) (Signal "E") der Logikeinheit (85) den Zustand auf Einzel-Bussystem 2 steuert; am dritten Eingang (56) (Signal "D") der Logikeinheit (85) erscheint der Zustand auf Einzel-Bussystem 1 und am vierten Eingang (58) erscheint der Zustand auf dem Einzel-Bussystem 2 jeweils in Form eines log.1- oder log.0-Pegels.

Der Verständlichkeit halber wird im folgenden kurz auf die Steuer- und Empfängersignale bei einem Standard-CAN-Bus hingewiesen.

Bei Standard-CAN-Anwendungen findet die Kommunikation zwischen dem CAN-Controller und dem angeschlossenen Bus über zwei Signale, nämlich über ein Signal "transmit" [dies entspricht dem Signal "Tx", d. h. dem Signal am Eingang (8) nach Fig. 1] und über ein Signal "receive" [dies entspricht dem Signal "Rx", d. h. dem Signal am Ausgang (9) nach Fig. 1] statt. Das Signal "transmit" wird von dem CAN-Controller zu dem Bus-Treiber geführt; ist der Zustand des Signals "transmit" auf log.1, so wird auf dem angeschlossenen Bus der Zustand "dominant" erzeugt. Der Bus-Empfänger liefert das Signal "receive", welches im Fall des Bus-Zustandes "dominant" im Zustand log.1 und im Fall des Bus-Zustandes "rezessiv" im Zustand log.0 steht.

Bei der erfindungsgemäßen Einrichtung erzeugt das Signal "Tx" ebenfalls den Bus-Zustand "dominant" und das Signal "Rx" informiert ebenfalls über den Bus-Zustand "dominant" bzw. "rezessiv". Im Unterschied zur Standard-Lösung erzeugt das Signal "Tx" den Bus-Zustand "dominant" nicht nur auf einem Bus, sondern auf allen Einzel-Bussystemen, die der Sternkoppler umfaßt. In logischer Folge stellt bei der Erfindung das Signal "Rx" das Ergebnis der Summenbildung aller Bus-Stati aller am Sternkoppler angeschlossenen Einzel-Bussysteme dar. Aufgrund der im CAN-System verwendeten Bus-Treiber- und Bus-Empfänger-Schaltungen findet eine logische ODER-Funktion zwischen allen angeschlossenen Einzel-Bussystemen statt, d. h. das Signal "Rx" steht auf log.1, wenn auf mindestens einem der angeschlossenen Einzel-Bussysteme der Zusstand "dominant" herrscht, und er ist dann und nur dann log.0, wenn alle angeschlossenen Einzel-Bussysteme den Zustand "rezessiv" aufweisen. Die Logikeinheit (85) aus Fig. 3 bewirkt im Zusammenwirken mit den ODER-Gliedern (4, 5, 6) aus Fig. 1, daß alle entsprechend Fig. 1 am Sternkoppler angeschlossenen Einzel-Bussysteme in den Zustand "dominant" versetzt werden, wenn der CAN-Controller (7) das Signal am siebten Eingang (8) (Signal "Tx") des T-Treibers (1) nach Fig. 1 auf log.1 setzt. Das zum CAN-Controller (7) führende Signal am achten Ausgang (9) (Signal "Rx") des T-Treibers (1) nach Fig. 1 steht immer dann auf log.1, wenn auf mindestens einem der am Sternkoppler angeschlossenen Einzel-Bussysteme der Zustand "dominant" herrscht; es steht auf log.0, wenn alle angeschlossenen Einzel-Bussysteme den Zustand "rezessiv" aufweisen.

Die Logikeinheit (85) für den T-Treiber (1) nach Fig. 2 hat die Aufgabe, im Zusammenwirken mit den identisch aufgebauten Logikeinheiten von T-Treiber (2) und T-Treiber (3) und den ODER-Gliedern (4, 5, 6) nach Fig. 1 sicherzustellen, daß zum einen bei Vorlage eines vom CAN-Controller (7) gelieferten log.1-Pegels am Eingang (8) (Signal "Tx") auf allen an den Sternkoppler angeschlossenen Einzel-Bussystemen der Zustand "dominant" erzeugt wird. Zum anderen hat die genannte Logik-Einheit im Zusammenwirken mit den genannten Einheiten die Aufgabe, am Ausgang (9) (Signal "Rx") des T-Treibers (1) nach Fig. 1 einen log.1-Pegel an den CAN-Controller (7) zu liefern, wenn auf mindestens einem der am Sternkoppler angeschlossenen Einzel-Bussysteme der Zustand "dominant" herrscht (vergl. Fig. 1). Herrscht dagegen auf allen angeschlossenen Einzel-Bussystemen der Zustand "rezessiv", dann steht am Ausgang (9) zum CAN-Controller (7) (Signal "Rx") ein log.0-Pegel an.

Vorstehend wurde anhand von Fig. 3 bereits die Verschaltung der ODER-Glieder (86, 87, 88, 89) der Logikeinheit (85) und ihre Verbindung mit den Eingängen (25, 9, 56, 58) und den Ausgängen (26, 8, 55, 57) erläutert.

Setzt der CAN-Controller (7) entsprechend Fig. 1 das Signal "Tx" auf log.1 [zweiter Eingang (8) der Logikeinheit (85) nach Fig. 3], so werden aufgrund der ODER-Glied-Verschaltungen sowohl Signal "C" [dritter Ausgang (55) der Logikeinheit (85) nach Fig. 3] als auch Signal "E" [vierter Ausgang (57) der Logikeinheit (85) nach Fig. 3] auf log.1 gesetzt. Entsprechend Fig. 2 gehen sowohl Einzel-Bussystem 1 als auch Einzel-Bussystem 2 in den Zustand "dominant" über. Gleichzeitig wird das Signal "Rint" [erster Ausgang (26) der Logikeinheit (85) nach Fig. 3] auf log.1 gesetzt. Im Zusammenwirken mit den ODER-Gliedern (4, 5, 6) aus Fig. 1 bewirkt Signal "Rint", daß bei allen im Sternkoppler enthaltenen T-Treibern (1, 2, 3) am Eingang für das Signal "Text" [jeweils fünfte Eingänge (25, 27, 29) der T-Treiber (1, 2, 3) nach Fig. 1] ein log.1-Pegel erscheint. Durch das Signal "Text" werden alle vorerst noch nicht beteiligten T-Treiber (d. h. T-Treiber mit noch "rezessiven" Einzel-Bussystemen) aufgefordert, die die an sie angeschlossenen Einzel-Bussysteme in den Zustand "dominant" zu versetzen. Im gerade besprochenen Beispiel, bei dem die Erst-Aktivierung vom Signal "Tx" aus dem CAN-Controller (7) ausgeht, sind dies die zwei T-Treiber (2, 3).

Die T-Treiber (2, 3) brauchen im Gegensatz zu T-Treiber (1) nicht über einen siebten Ausgang (Signal "Rx") und einen achten Eingang (Signal "Tx") zu verfügen. Abgesehen von diesen Unterschieden enthalten die T-Treiber (2, 3) jedoch, wie schon erwähnt, ebenfalls eine Logikeinheit, die identisch zu der in Fig. 3 dargestellten Logikeinheit (85) für T-Treiber (1) ist.

Um die Unterschiede von T-Treiber (1) zu den T-Treibern (2, 3) nach Fig. 1 zu realisieren, werden die in den T-Treibern (2, 3) enthaltenen Logikeinheiten unterschiedlich beschaltet, wobei zwei Maßnahmen vorgesehen sind. Die erste Maßnahme besteht darin, daß bei diesen Logikeinheiten entsprechend Fig. 3 eine Brücke zwischen dem zweiten Eingang [der zweite Eingang (Signal "Tx") ist in der Logikeinheit (85) für T-Treiber (1) mit den Bezugszeichen (8) versehen] und der Gerätemasse hergestellt wird. Auf diese Weise herrscht an den zweiten Eingängen der Logikeinheiten für die T-Treiber (2, 3) ein konstanter log.0-Pegel vor, wodurch eine Aktivierung über diesen Eingang unterbunden wird. Die zweite Maßnahme besteht darin, daß die zweiten Ausgänge [der zweite Ausgang (Signal "Rx") ist in der Logikeinheit (85) für T-Treiber (1) mit dem Bezugszeichen (9) versehen] der Logikeinheiten für die T-Treiber (2, 3) nicht angeschlossen werden. Dadurch werden bei T-Treibern (2, 3) die Ausgänge (98) (Signale "Rx") des zweiten ODER-Gliedes (86) der Logikeinheit (87) nach Fig. 3 nicht ausgewertet.

In dem gerade beschriebenen Beispiel der Erst-Aktivierung des Sternkopplers über das Signal "Tx" des CAN-Controllers (7) entsprechend Fig. 1 werden also die auf die Erst-Aktivierung des T-Treibers (1) folgenden, weiteren Aktivierungen der T-Treiber (2, 3) durch die Signale "Text" [fünfte Eingänge (27, 29) entsprechend Fig. 1] veranlaßt.

Die Wirkung des Signales "Text" wird im folgenden am Beispiel des T-Treibers (2) erläutert. Aufgrund der erwähnten Gleichheiten im Schaltungsaufbau der Logikeinheiten in den T-Treibern ist damit auch verallgemeinernd beschrieben, wie ein T-Treiber die ihm zugeordneten zwei Einzel-Bussysteme in den Zustand "dominant" versetzt, wenn an seinem fünften Eingang (Signal "Text") ein log.1-Pegel vorgegeben wird.

Als Folge einer Erst-Aktivierung auf einem anderen T-Treiber als dem T-Treiber (2) [also z. B. der gerade beschriebenen Erst-Aktivierung des T-Treibers (1) durch das CAN-Controller-Signal "Tx"] liegt, wie erläutert, am fünften Eingang des T-Treibers (2) (Signal "Text") ein log.1-Pegel an. Die im T-Treiber (2) enthaltene Logikeinheit veranlaßt dann, daß die am T-Treiber (2) angeschlossenen Einzel-Bussystem 3 und Einzel-Bussystem 4 in den Zustand "dominant" übergehen. Da die T-Treiber (1, 2, 3) alle gleich aufgebaut sind, und die zwei erwähnten Unterschiede in der Beschaltung zwischen den T-Treibern (2, 3) und dem T-Treiber (1) bezüglich der Funktion des Signales "Text" keine Rolle spielen, wird das schaltungstechnische Geschehen, wie ein log.1-Pegel am fünften Eingang (27) des T-Treibers (2) (Signal "Text") zur "Dominant-Setzung" der dem T-Treiber (2) zugeordneten Einzel-Bussysteme 3 und 4 führt, beispielhaft anhand des T-Treibers (1) mit seiner in Fig. 3 dargestellten Logikeinheit (85) erläutert.

Bei Anliegen eines log.1-Pegels am fünften Eingang (25) (Signal "Text") des T-Treibers (1) nach Fig. 1 liegt dieser Pegel ebenfalls am ersten Eingang (25) der Logikeinheit (85) nach Fig. 3 an. Die dritten und vierten ODER-Glieder (88, 89) bewirken, daß in diesem Falle auch an den dritten und vierten Ausgängen (55, 57) (Signale "C", "E") ein log.1-Pegel ausgegeben wird. Diese beiden Signale setzen, wie bereits erläutert, die dem T-Treiber (1) zugeordneten Einzel-Bussysteme 1 und 2 in den Zustand "dominant".

Bisher wurde erläutert, wie sich nach einer Erst-Aktivierung des T-Treibers (1) durch das Signal "Tx" des CAN-Controllers (7) nach Fig. 1 zwei unterschiedliche Folgen einstellen. Die erste Folge besteht darin, daß die dem T-Treiber (1) zugeordneten Einzel-Bussysteme 1 und 2 in den Zustand "dominant" versetzt werden. Die zweite Folge besteht darin, daß über die Wirkung der sechsten Ausgänge (26, 28, 30) (Signal "Rint") und der von den ODER-Gliedern (4, 5, 6) erzeugten log.1-Pegel an den fünften Eingängen (25, 27 29) (Signal "Text") der T-Treiber (1, 2, 3) nach Fig. 1 alle an den vorhandenen T-Treibern angeschlossenen Einzel-Bussysteme, die noch "rezessiv" sind, ebenfalls in den Zustand "dominant" übergehen.

Durch den völlig gleichartigen Aufbau der T-Treiber bezüglich des fünften Eingangs (Signal "Text") und des sechsten Ausgangs (Signal "Rint") kann festgestellt werden, daß nicht nur bei einer Erst-Aktivierung durch das CAN-Controller-Signal "Tx" sämtliche an allen T-Treibern (1, 2, 3) angeschlossenen Einzel-Bussysteme in den Zustand "dominant" versetzt werden. Vielmehr erfolgt, verallgemeinernd gesagt, die "Dominant"-Setzung sämtlicher an allen T-Treibern (1, 2, 3) angechlossenen Einzel-Bussysteme 1, 2 und 3 unabhängig von der Erst-Aktivierung und zwar immer dann, wenn auf dem sechsten Ausgang irgendeines der T-Treiber (1, 2, 3) ein log.1-Signal (Signal "Rint") ausgegeben wird.

Zusammenfassend kann daher gesagt werden, daß immer alle Einzel-Bussysteme des Sternkopplers "dominant" werden, wenn irgendeine Veranlassung für den Zustand "dominant" besteht. Eine diesbezügliche Veranlassung liegt einerseits vor, wenn irgendein Bus-Teilnehmer auf irgendeinem Einzel-Bussystem dieses Einzel-Bussystem in den Zustand "dominant" bringt und ist andererseits immer dann gegeben, wenn der CAN-Controller (7) einen log.1-Pegel am siebten Eingang (8) (Signal "Tx") des T-Treibers (1) nach Fig. 1 einspeist.

Neben seinen Steuerfunktionen führt ein CAN-Controller auch Lesefunktionen aus. Zu diesem Zweck wird der CAN-Controller (7) ständig über den Zustand aller Einzel-Bussysteme des Sternkopplers informiert; mit Hilfe des achten Ausganges (9) des T-Treibers (1) (Signal "Rx") entsprechend Fig. 1 wird ihm der Status auf dem Einzel-Bussystem mitgeteilt. Dabei erzeugt der T-Treiber (1) an seinem achten Ausgang (9) (Signal "Rx") einen log.1-Pegel, wenn auf irgendeinem der am Sternkoppler angeschlossenen Einzel-Bussysteme der Zustand "dominant" herrscht.

Hierzu wird auf die in Fig. 3 dargestellte Logikeinheit (85) für T-Treiber (1) verwiesen. Das zweite ODER-Glied (87) erzeugt mit Hilfe seiner vier Eingänge (94, 95, 96, 97) das Signal "Rx" am Ausgang (98), wobei der Ausgang (98) gleichzeitig den achten Ausgang (9) des T-Treibers (1) zum CAN-Controller (7) nach Fig. 1 darstellt.

Entsprechend den vier Eingängen (94, 95, 96, 97) des zweiten ODER-Gliedes (87) wird der Ausgang (9) (Signal "Rx") zum CAN-Controller (7) unter einer von vier Bedingungen auf log.1 gesetzt. Die erste Bedingung stellt den Fall dar, daß die Erst-Aktivierung durch den CAN-Controller erfolgt, d. h. daß er selbst einen log.1-Pegel am siebten Eingang (8) des T-Treibers (1) nach Fig. 1 angeliefert hat (Signal "Tx") - entsprechend der beschriebenen Verschaltungen liegt dann auch am ersten Eingang (94) des zweiten ODER-Gliedes (87) ein log.1-Pegel an. In diesem Fall liest der CAN-Controller (7), wie in der CAN-Norm festgelegt, einen von ihm selbst initiierten "Dominant"-Status über das Signal "Rx" zurück. Die zweite Bedingung besteht darin, daß am fünften Eingang (25) des T-Treibers (1) nach Fig. 1 (Signal "Text") ein log.1-Pegel anliegt; dadurch liegt auch am zweiten Eingang (95) des zweiten ODER-Gliedes (87) ein log.1-Pegel vor. Wie vorstehend erläutert, bedeutet dieser Fall, daß auf mindestens einem anderen T-Treiber als dem T-Treiber (1) [nämlich mindestens einem der T-Treiber (2, 3)] der Zustand "dominant" gegeben ist. Die dritte Bedingung besteht darin, daß über den dritten Eingang (56) (Signal "D") der Logikeinheit (85) und damit auch am dritten Eingang (96) des dritten ODER-Gliedes (87) ein log.1-Pegel angeliefert wird, was, wie bereits beschrieben, bedeutet, daß sich das dem T-Treiber (1) zugeordnete Einzel-Bussystem 1 im Zustand "dominant" befindet. Analog zur dritten bedeutet die vierte Bedingung, daß am vierten Eingang (58) (Signal "E") der Logikeinheit (85) und damit auch am vierten Eingang (97) des dritten ODER-Gliedes (87) ein log.1-Signal anliegt; die vierte Bedingung bedeutet, daß auf dem dem T-Treiber (1) zugeordneten Einzel-Bussystem 2 der Zustand "dominant" vorliegt.

Wie vorstehend angedeutet wird, bedeuten diese vier Bedingungen zusammengefaßt, daß ein log.1-Signal "Rx" zum CAN-Controller (7) aus Fig. 1 in allen Fällen geliefert wird, in denen der Zustand "dominant" auf irgendeinem Einzel-Bussystem herbeigeführt wird. Die Fälle sind einmal, daß der CAN-Controller seinerseits als Erst-Aktivator mit Hilfe seines Signals "Tx" die Dominanz auf den Einzel-Bussystemen erzwingt und zum anderen alle diejenigen Fälle, in denen irgendein Bus-Teilnehmer auf irgendeinem Einzel-Bussystem die Rolle des Erst-Aktivators übernimmt, indem er das spezielle Einzel-Bussystem, an dem er angeschlossen ist, in den Zustand "dominant" versetzt.

Bei bezogen auf einen T-Treiber "externen" Ursachen zur "Dominant"-Setzung seiner ihm zugeordneten Einzel-Bussysteme wird dieser T-Treiber hierzu aufgefordert, indem ein log.1-Pegel an seinen fünften oder seinen siebten Eingang (25, 8) (Signale "Text", "Tx") entsprechend Fig. 2 gelegt wird. Der Begriff "extern" ist hier im Gegensatz zum Begriff "intern" zu verstehen und bedeutet, daß die Ursachen zur "Dominant"-Setzung außerhalb des Einflußbereichs dieses T-Treibers liegen, d. h., daß sie nicht durch Aktionen auf den ihm zugeordneten zwei Einzel-Bussystemen begründet sind.

Bezogen auf einen T-Treiber liegen "interne" Ursachen zur "Dominant"-Setzung seiner ihm zugeordneten Einzel-Bussysteme vor, wenn eines dieser Einzel-Bussysteme (veranlaßt durch einen anderen Bus-Teilnehmer als Erst-Aktivator auf diesem Einzel-Bussystem) sich im Zustand "dominant" befindet. Entsprechend Fig. 3 liegt dann je nachdem, welches der beiden Einzel-Bussysteme sich im Zustand "dominant" befindet, am dritten oder am vierten Eingang (56, 58) (Signal "D", Signal "F") der Logikeinheit (85) ein log.1-Signal an. Die dritten und vierten ODER-Glieder (88, 89) bewirken, daß das jeweils andere Bussystem, das noch nicht "dominant" sondern noch "rezessiv" ist, in den Zustand "dominant" übergeht. Über die beschriebenen Verknüpfungen der ODER-Glieder erzeugt ein log.1-Signal am dritten Eingang (56) (Signal "D") der Logikeinheit (85) einen log.1-Pegel am vierten Ausgang (57) (Signal "E") der Logikeinheit (85). In gleicher Weise erzeugt ein log.1-Signal am vierten Eingang (58) (Signal "F") der Logikeinheit (85) einen log.1-Pegel am dritten Ausgang (55) (Signal "C") der Logikeinheit (85). Wie bereits beschrieben setzen entsprechend Fig. 2 ein log.1-Signal "C" das Einzel-Bussystem 1 und ein log.1-Signal "E" das Einzel-Bussystem 2 in den Zustand "dominant".

Bei Vorliegen von "externen" wie "internen" Ursachen zur "Dominant"-Setzung seiner ihm zugeordneten Einzel-Bussysteme teilen die T-Treiber (1, 2, 3) diese Tatsache den anderen T-Treibern über ihre sechsten Ausgänge (26, 28, 30) (Signale "Rint", vergl. Fig. 1) mit. Im Falle von externen Ursachen muß diese Mitteilung allerdings nur erfolgen, wenn der CAN-Controller (7) unter Verwendung seines Signals "Tx" als Erst-Aktivator aufgetreten ist. Bei einer externen Ursache, die dadurch gegeben ist, daß ein Bus-Teilnehmer eines Einzel-Bussystems, das einem anderen T-Treiber zugeordnet ist, als Erst-Aktivator auftritt, kann auf eine Mitteilung verzichtet werden. Für diesen Fall sind nämlich die ODER-Glieder (4, 5, 6) nach Fig. 1 vorgesehen; sie stellen sicher, daß Signale "Text" an alle T-Treiber (1, 2, 3) erzeugt werden [log.1-Pegel an den fünften Eingängen (25, 27, 29)], wenn nur einer der T-Treiber (1, 2, 3) an seinem sechsten Ausgang (26, 28, 30) (Signale "Rint") einen log.1-Pegel abgibt.

Ein T-Treiber(1, 2, 3) nach Fig. 1 erzeugt daher bei den beschriebenen "externen" und bei allen "internen" Bedingungen zur "Dominant"-Setzung an seinem sechsten Ausgang (26, 28, 30) (Signal "Rint") einen log.1-Pegel; schaltungstechnisch wird das Signal "Rint" durch das erste ODER-Glied (86) der Logikeinheit (85) erzeugt. Aus der beschriebenen Verschaltung des ersten ODER-Gliedes (86) ergibt sich, daß der erste Ausgang (26) (Signal "Rint") der Logikeinheit (85) aufgrund der Pegel-Zustände an den drei Eingängen (90, 91, 92) des ersten ODER-Gliedes (86) unter einer der folgenden Bedingungen auf log.1 steht: log.1-Pegel an zweitem Eingang (8) (Signal "Tx" der Logikeinheit (85) ["externe" Ursache bei Veranlassung durch CAN-Controller-Signal "Tx"], log.1-Pegel am dritten Eingang (56) (Signal "D") der Logikeinheit (85) [erste "interne" Ursache], log.1-Pegel am vierten Eingang (58) (Signal "F") der Logikeinheit (85) [zweite "interne" Ursache].

Entsprechend Fig. 1 erzeugen dann in der beschriebenen Weise die ODER-Glieder (4, 5, 6) aus den sechsten Ausgängen (26, 28, 30) (Signale "Rint") der T-Treiber (1, 2, 3) die Signale "Text" zu den fünften Eingängen (25, 27, 29) der T-Treiber (1, 2, 3).

Im folgenden wird eine elektronische Baugruppe "Logische 1-Verzögerung" beschrieben, die dann im weiteren Verlauf der Erläuterungen Verwendung finden wird.

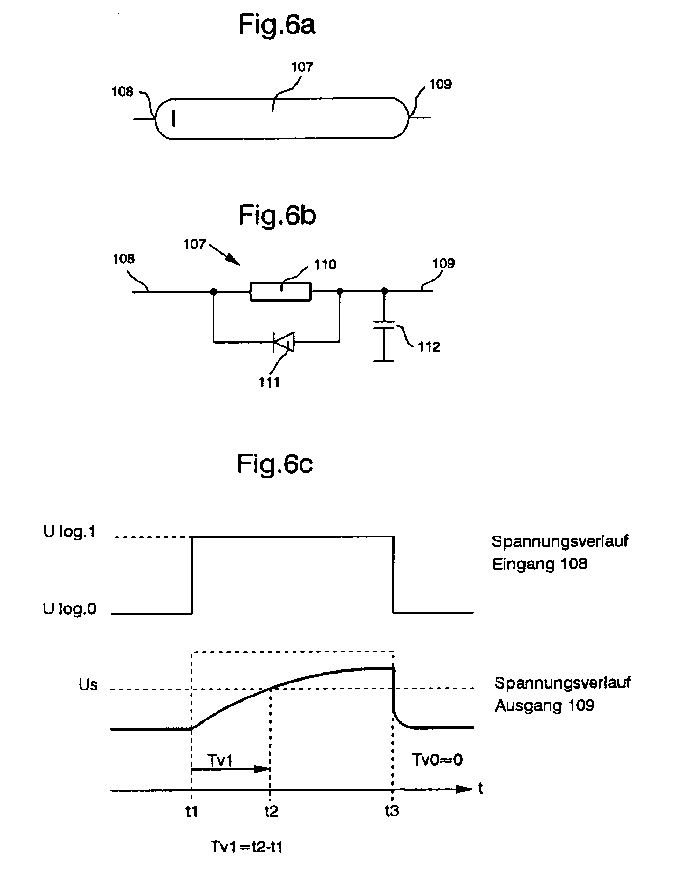

Fig. 6a zeigt das Symbol der elektronischen Baugruppe (107), die einen Eingang (108) und einen Ausgang (109) aufweist. Es ist daran gedacht, diese Baugruppe zwischen einem logischen Ausgang eines logischen elektronischen Schaltelementes und einem logischen Eingang eines anderen logischen elektronischen Schaltelementes einzufügen. Der Zweck, der mit dieser Baugruppe erreicht wird, besteht darin, daß ein log.1-Signal am Eingang (108) um eine Zeit Tv1 später am Ausgang (109) der Baugruppe erscheint, während ein log.0-Signal am Eingang (108) der Baugruppe (107) möglichst unverzögert, d. h. mit einer vergleichsweise geringen Verzögerung Tv0 am Ausgang (109) auftritt. Es soll also gelten: Tv0 << Tv1.

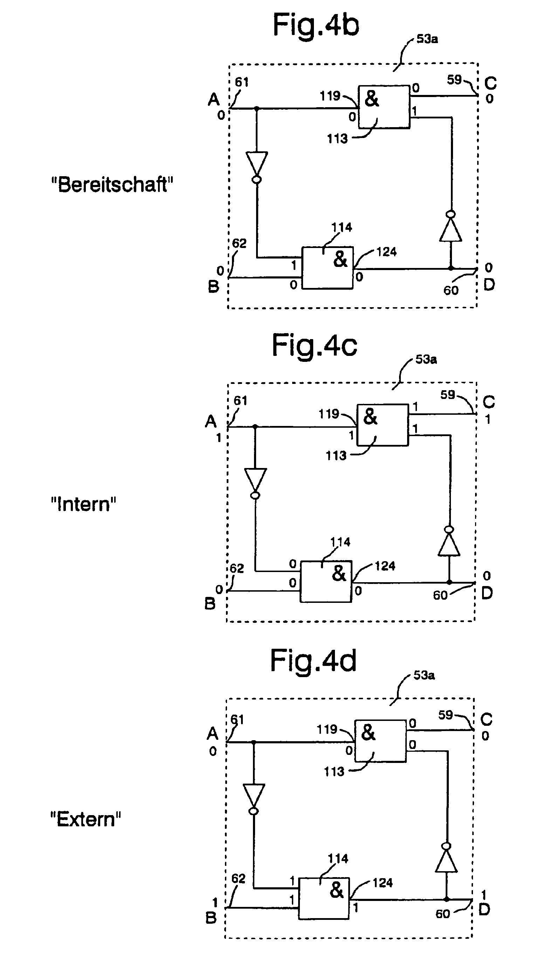

Fig. 6b zeigt eine technische Realisierung der Baugruppe (107). Zwischen Eingang (108) und Ausgang (109) liegt die Parallelschaltung aus einem Widerstand R (110) und einer Diode D (111) mit der in Fig. 4b dargestellten Polarität. Am Ausgang (109) befindet sich der erste Anschluß eines Kondensators C (112). Der zweite Anschluß des Kondensators C (112) liegt auf Massepotential. Zur Erläuterung der Funktionsweise der Baugruppe (107) sind in Fig. 6c die Spannungsverläufe am Ein- und Ausgang (108, 109) der Baugruppe (107) dargestellt.

Wie aus Fig. 6c zu entnehmen ist, wechselt der Pegel am Eingang (108) der Baugruppe (107) zum Zeitpunkt t1 vom log.0-Pegel in den log.1-Pegel. Der Ausgang (109) der Baugruppe (107) vermag dem Pegel-Sprung zum Zeitpunkt t1 nicht sofort zu folgen, da die Diode D (111) der Baugruppe in Sperrichtung betrieben wird. Statt dessen lädt sich der Kondensator C (112) ausgehend von dem log.0-Pegel mit einer Zeitkonstante auf, die durch den Widerstand R (110) und den Kondensator C (112) gegeben ist.

Zum Zeitpunkt t2 überschreitet der Ausgang (109) der Baugruppe (107) die Schaltschwelle Us eines nicht dargestellten, der Baugruppe (107) nachgeschalteten Logik-Einganges. Die Zeit, die zwischen den Zeitpunkten t1 und t2 verstreicht, ist die erwünschte Verzögerungszeit Tv1 für den log.1-Pegel (Tv1 = t2 - t1). Durch geeignete Dimensionierung des Kondensators C, des Widerstandes R und der Diode D (Durchlaß- und Sperrcharakteristik) läßt sich die erwünschte Verzögerungszeit Tv1 einstellen.

Zum Zeitpunkt t3 geht der Pegel am Eingang (108) der Baugruppe (107) vom log.1-Zustand in den log.0-Zustand über. Ab jetzt wird die Diode D (111) in Durchlaßrichtung betrieben. Durch den vergleichsweise geringen Durchlaßwiderstand der Diode D (111) wird der Kondensator C (112) sehr schnell entladen, so daß zum Zeitpunkt t4, der nur kurz hinter dem Zeitpunkt t3 liegt, die Schaltschwelle Us des nachfolgenden Logik-Eingangs praktisch sofort wieder unterschritten wird. Bei richtiger Dimensionierung ist die Verzögerungszeit Tv0 für den log.0-Pegel sehr klein gegenüber Tv1 und kann daher vernachlässigt werden.

Bei der hier vorliegenden Anwendung wurden unter Verwendung der Baugruppe (107) Verzögerungszeiten Tv1 im Bereich von 100 bis 200 ns realisiert.

Bei den bisherigen Betrachtungen wurde davon ausgegangen, daß bei Rückkopplungsunterdrückungen 1 (53) entsprechend Fig. 2 die Eingänge und Ausgänge (59, 61) sowie (62, 60) durchgehend verbunden sind. In gleicher Weise sind bei Rückkopplungsunterdrückungen 2 (54) die Eingänge und Ausgänge (63, 65) sowie (66, 64) durchgehend verbunden. Bei einer Realisierung nach diesen Annahmen stellen sich jedoch unerwünschte Rückkopplungen ein. Diese Rückkopplungen kommen sowohl bei Bus-Aktivitäten vor, die von CAN-Controllern (7) (vergl. Fig. 1) initiiert werden als auch bei Bus-Aktivitäten, die von irgendwelchen Bus-Teilnehmern auf irgendwelchen Einzel-Bussystemen (vergl. Fig. 1) ausgehen. Bei den folgenden Erläuterungen wird auf Fig. 2 verwiesen.

Wenn z. B. ein am Einzel-Bussystem 1 angeschlossener Bus-Teilnehmer auf dem Einzel-Bussystem 1 den Zustand "dominant" einprägt, so erscheint am dritten Eingang (56) (Signal "D") der Logikeinheit (85) ein log.1-Signal. Wie vorstehend erläutert, wird durch den logischen 1-Zustand am dritten Eingang (56) bewirkt, daß am ersten Ausgang (26) der Logikeinheit (85) ein log.1-Signal anliegt (Signal "Rint"). Dieses Signal erzeugt, wie beschrieben, über den Weg durch die anderen T-Treiber (2, 3) und die ODER-Glieder (4, 5, 6) entsprechend Fig. 1 am ersten Eingang (25) (Signal "Text") der Logikeinheit (85) nach Fig. 3 einen log.1-Pegel. Dies hat zur Folge, daß auch, wie erläutert, über den dritten Ausgang (55) (Signal "C") der Logikeinheit (85) ein log.1-Signal zum Einzel-Bussystem 1 (vergl. Fig. 2) ausgegeben wird. Dadurch wird Einzel-Bussystem 1 im Zustand "dominant" gehalten, auch wenn der erwähnte Bus-Teilnehmer auf Einzel-Bussystem 1 seinerseits das Einzel-Bussystem 1 in der Zwischenzeit freigegeben hat, was ohne den beschriebenen Rückkopplungseffekt zur Folge gehabt hätte, daß das Einzel-Bussystem 1 in den Zustand "rezessiv" übergegangen wäre.

Ein Rückkopplungseffekt der erwähnten Art tritt auch auf, wenn die Bus-Aktivitäten durch den CAN-Controller (7) initiiert werden [Signal "Tx" am zweiten Eingang (8) der Logikeinheit (85)]. Auch in diesem Fall wird ein log.1-Signal am ersten Ausgang (26) (Signal "Rint") der Logikeinheit (85) ausgegeben. Über den erwähnten Weg wird ebenfalls ein log.1-Pegel am ersten Eingang (25) (Signal "Text") der Logikeinheit (85) erzeugt. Wenn der CAN-Controller (7) (vergl. Fig. 1) nun sein Signal "Tx" auf log.0 zurücksetzt [zweiter Eingang (8) der Logikeinheit (85)], so verharrt (Grund dafür sind Signal-Durchlaufzeiten auf dem erwähnten Weg) das Eingangssignal "Text" [erster Eingang (25) der Logikeinheit (85)] zunächst im Zustand log.1. Dadurch bleiben die angeschlossenen Einzel-Bussysteme in den Zustand "dominant" versetzt, obwohl der CAN-Controller (7) (vergl. Fig. 1) seinerseits das Signal "Tx" bereits auf log.0 zurückgesetzt hat.

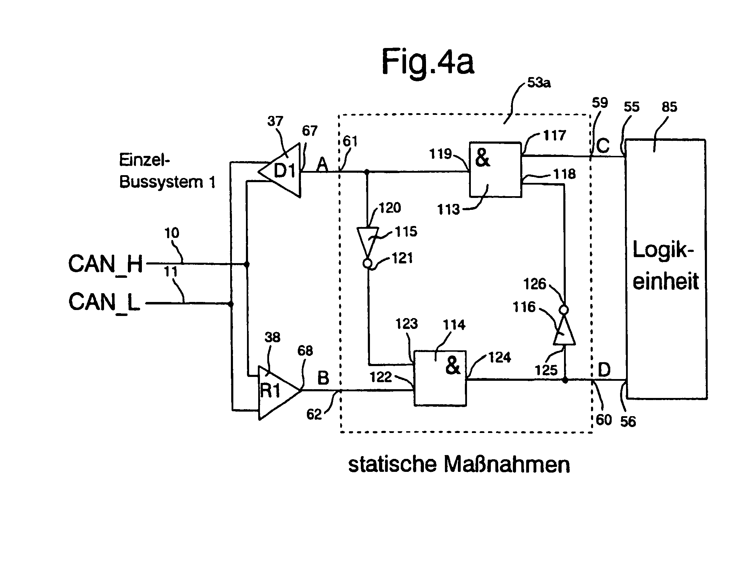

Fig. 4a zeigt die Variante Rückkopplungsunterdrückung 1 (53a), bei der die Rückkopplungsunterdrückung 1 (53) nach Fig. 2 mit statischen Unterdrückungs-Maßnahmen versehen ist. Dieser Schaltungsteil besteht aus einem ersten UND-Glied (113), einem zweiten UND-Glied (114), einem ersten Inverter (115) und einem zweiten Inverter (116). Das erste UND-Glied verfügt über einen ersten Eingang (117), einen zweiten Eingang (118) und einen Ausgang (119); das zweite UND-Glied (114) verfügt über einen ersten Eingang (122), einen zweiten Eingang (123) und einen Ausgang (124); der erste Inverter (115) verfügt über einen Eingang (120) und einen Ausgang (121); der zweite Inverter (116) verfügt über einen Eingang (125) und einen Ausgang (126). Der erste Eingang (59) (Signal "C") der Rückkopplungsunterdrückung 1 (53a) ist mit dem ersten Eingang (117) des ersten UND-Gliedes (113) verbunden. Der Ausgang (119) des ersten UND-Gliedes (113) führt sowohl zum zweiten Ausgang (61) (Signal "A") der Rückkopplungsunterdrückung 1 (53a) als auch zum Eingang (120) des ersten Inverters (115). Der Ausgang (121) des ersten Inverters (115) führt zu dem zweiten Eingang (123) des zweiten UND-Gliedes (114). Der zweite Eingang (62) (Signal "B") der Rückkopplungsunterdrückung 1 (53a) ist mit dem ersten Eingang (122) des zweiten UND-Gliedes (114) verbunden. Der Ausgang (124) des zweiten UND-Gliedes (114) ist sowohl mit dem ersten Ausgang (60) (Signal "D") der Rückkopplungsunterdrückung 1 (53a) als auch mit dem Eingang (125) des zweiten Inverters (116) verbunden. Der Ausgang (126) des zweiten Inverters (116) ist mit dem zweiten Eingang (118) des ersten UND-Gliedes (113) verbunden.

Die auf diese Weise verbundenen Logik-Schaltelemente bilden ein R-S-Flip-Flop mit zwei stabilen Zuständen und einem offenen Zustand; der offene Zustand wird im folgenden mit dem Zustand "Bereitschaft", der erste stabile Zustand mit dem Zustand "Intern" und der zweite stabile Zustand mit dem Zustand "Extern" bezeichnet. Die Steuerung des R-S-Flip-Flops erfolgt über die ersten und zweiten Eingänge (59, 62) der Rückkopplungsunterdrückung 1 (53a).

In den Abbildungen Fig. 4b, Fig. 4c und Fig. 4d ist die Rückkopplungsunterdrückung 1 (53a) nach Fig. 4a in etwas vereinfachter Form für die Zustände "Bereitschaft", "Intern" und "Extern" dargestellt. In diesen Abbildungen sind die Logikzustände der ersten und zweiten Eingänge (59, 62), die die Flip-Flop-Funktion steuern, sowie die Logikzustände der ersten und zweiten Ausgänge (60, 61) mit eingezeichnet (log.0 als Ziffer 0, log.1 als Ziffer 1). Bei den Erläuterungen zu Fig. 4b bis Fig. 4d wird bezüglich der Detailerläuterungen auf Fig. 4a zurückgegriffen, da in Fig. 4a sämtliche Bezugszeichen enthalten und in den Fig. 4b bis 4d einige Bezugszeichen der Übersichtlichkeit wegen weggelassen worden sind.

Fig. 4b zeigt die Rückkopplungsunterdrückung 1 (53a) im Zustand "Bereitschaft". Dieser Zustand liegt immer dann vor, wenn beide Eingangssignale (59, 62) der Rückkopplungsunterdrückung 1 (53a) auf log.0 stehen. Dies bedeutet, daß weder vom CAN-Controller (7) nach Fig. 1 eine Anforderung (Signal "Tx") vorliegt, die angeschlossenen Einzel-Bussysteme in den Zustand "dominant" zu versetzen, noch daß vom Einzel-Bussystem 1 über den Bus-Empfänger (38) eine Meldung vorliegt, Einzel-Bussystem 1 befinde sich im Zustand "dominant". Die log.0-Pegel an den ersten Eingängen (117, 122) der ersten und zweiten UND-Glieder (113, 114) haben zur Folge, daß die Ausgänge beider UND-Glieder (119, 124) auf log.0 stehen. Über die ersten und zweiten Inverter (115, 116) werden diese log.0-Informationen in log.1-Informationen umgewandelt, so daß an den zweiten Eingängen (118, 123) der ersten beiden UND-Glieder (113, 114) ein log.1-Pegel anliegt. Dadurch sind das erste und zweite UND-Gatter in "Bereitschaft", in einen anderen Zustand umzuschalten. Eine Umschaltung findet statt, wenn bei einem der beiden UND-Glieder (113, 114) an ihrem jeweils ersten Eingang (117, 122) eine log.1-Information erscheint.

Solange der Zustand "Bereitschaft" besteht, stehen die ersten und zweiten Ausgänge (60, 61) der Rückkupplungsunterdrückung 1 (53a) nach Fig. 2 entsprechend den Ausgängen beider UND-Glieder ebenfalls im log.0-Zustand. Der Zustand "Bereitschaft" wird also verlassen, wenn entweder am ersten Eingang (59) oder am zweiten Eingang (62) der Rückkopplungsunterdrückung 1 (53a) ein log.1-Signal angeliefert wird.

Fig. 4c zeigt die Rückkopplungsunterdrückung (53a) im Zustand "Intern". Dieser Zustand wird eingenommen, wenn am ersten Eingang (59) der Rückkopplungsunterdrückung 1 (53a) ein log.1-Signal angeliefert wird (Signal "C"). Der Ausgang (119) des ersten UND-Gliedes (113) schaltet um in den log.1-Zustand; diese Information wird im Inverter (115) invertiert, so daß am zweiten Eingang (123) des zweiten UND-Gliedes (114) ein log.0-Pegel vorliegt. Das zweite UND-Glied (114) bleibt also bis auf weiteres gesperrt; an seinem Ausgang (124) liegt ein log.0-Pegel an, der über den zweiten Inverter (116) den zweiten Eingang (118) des ersten UND-Gliedes (113) weiter im Zustand log.1 hält. Ausgehend von der Logikeinheit (85) nach Fig. 2 wird auf diese Weise das Einzel-Bussystem 1 über den Bus-Treiber (37) in den Zustand "dominant" versetzt.

Der Bus-Empfänger (38) nach Fig. 2 liefert am zweiten Eingang (62) der Rückkopplungsunterdrückung 1 (53a) nach Fig. 2 nun ein log.1-Signal an, da er den Zustand "dominant" auf dem Einzel-Bussystem 1 erkannt hat. Das zweite UND-Glied (114) der Rückkopplungsunterdrückung 1 (53a) sperrt jedoch die Weiterleitung dieses Signals, so daß der erste Ausgang (60) der Rückkopplungsunterdrückung 1 (53a) im Zustand log.0 verbleibt. Solange die Logikeinheit (85) das Signal "C" im log.1-Zustand erhält, bleibt der Weg von "innen" nach "außen" zugelassen [d. h. von der Logikeinheit (85) zum Einzel-Bussystem 1, was bedeutet, daß der Bus-Treiber (37) nach Fig. 2 aufgrund einer internen Anforderung angesteuert wird], wogegen der Weg von "außen" nach "innen" [d. h. vom Einzel-Bussystem 1 zur Logikeinheit (85)] gesperrt bleibt.

Setzt die Logikeinheit (85) das Signal "C" auf log.0 zurück, dann nimmt Rückkopplungsunterdrückung 1 (53a) wieder den Zustand "Bereitschaft" entsprechend Fig. 4b ein.

Fig. 4d zeigt Rückkopplungsunterdrückung 1 (53a) im Zustand "Extern". Ausgehend vom Zustand "Bereitschaft" nach Fig. 4b wird der Zustand "Extern" eingenommen, wenn ein Bus-Teilnehmer auf dem Einzel-Bussystem 1 diesen Bus in den Zustand "dominant" gebracht hat. Am zweiten Eingang (62) (Signal "B") der Rückkopplungsunterdrückung 1 (53a) erscheint dann ein log.1-Pegel, der den Ausgang (124) des zweiten UND-Gliedes (114) auf log.1 setzt. Der zweite Eingang (118) des ersten UND-Gliedes (113) wird auf log.0 gesetzt. Der Ausgang (119) des ersten UND-Gliedes (113) geht ebenfalls in den log.0-Zustand über und durch die Invertierung im ersten Inverter (115) liegt am zweiten Eingang (123) des zweiten UND-Gliedes (114) ein log.1-Pegel an, der das Offenhalten dieses UND-Gliedes bewirkt. Hierdurch wird der Weg von "außen" nach "innen" freigegeben [vom Einzel-Bussystem 1 zur Logikeinheit (85)], während alle nun möglicherweise eintreffenden internen Anforderungen (Anforderungen von "innen" nach "außen") unterbunden werden. Solange der Bus-Empfänger (38) den zweiten Eingang (62) der Rückkopplungsunterdrückung 1 (53a) nach Fig. 2 auf log.1 hält, wird nur Information vom Einzel-Bussystem 1 zur Logikeinheit (85) entsprechend Fig. 2 übertragen. Ausgehend vom Zustand "Extern" wird der Zustand "Bereitschaft" dann wieder eingenommen, wenn der Pegel am zweiten Eingang (62) der Rückkopplungsunterdrückung 1 (53) auf log.0 zurückgeht.

Die Rückkopplungsunterdrückung 1 (53a) nach Fig. 4a stellt also eine Verriegelungseinheit dar, die verhindert, daß Information gleichzeitig von "innen" nach "außen" und von "außen" nach "innen" übertragen wird. Sie stellt sicher, daß jeweils nur eine Übertragungseinrichtung eingenommen wird.

Bei der statischen Ausführung der Rückkopplungsunterdrückung 1 (53a) nach Fig. 4a treten während des Übergangs von einem Zustand in einen anderen kurze Überschneidungen von Signalen auf.

Es sei angenommen, daß Zustand "Intern" entsprechend Fig. 4c vorliegt. Das Einzel-Bussystem 1 befindet sich daher im Zustand "dominant" und es findet eine Übertragung von "innen" nach "außen" statt. Am Ende der Übertragung geht die Rückkopplungsunterdrückung 1 (53a) wieder in den Zustand "Bereitschaft" über, d. h. der zweite Eingang (123) des zweiten UND-Gliedes (114) wird auf log.1 gesetzt. Ab nun werden also log.1-Signale vom Ausgang (68) des Bus-Empfängers (38) wieder zugelassen.

Während der vorhergegangenen jetzt gerade beendeten Übertragung vom Typ "Intern" nach Fig. 4c) befand sich, wie erwähnt, das Einzel-Bussystem im Zustand "dominant" und während dieser Zeit lag daher auch am zweiten Eingang (62) der Rückkopplungsunterdrückung 1 (53a) ein vom Ausgang (68) des Bus-Empfängers (38) geliefertes log.1-Signal (Signal "B") an. In der Zeit, als sich Rückkopplungsunterdrückung 1 (53a) noch im Zustand "Intern" befand, bestand eine sichere Sperrung für dieses Signal.

Mit dem Übergang vom Zustand "Intern" in den Zustand "Bereitschaft" wird das zweite UND-Glied (114) durch die log.1-Information an seinem zweiten Eingang (123) praktisch zeitgleich aufgesteuert. Zu diesem Zeitpunkt ist jedoch die vorliegende log.1-Information am ersten Eingang (122) des UND-Gliedes (114), die vom Ausgang (68) des Bus-Empfängers (38) angeliefert wird, noch nicht abgeklungen. Über eine kurze Zeit, nämlich bis zum endgültigen Abklingen, liegt an beiden Eingängen (122, 123) des zweiten UND-Gliedes (114) ein log.1-Pegel an und während dieser Zeit entsteht an seinem Ausgang (124) ein Störsignal mit log.1-Pegel. Dieses Störsignal verhindert im Übergangsbereich zwischen Zustand "Intern" und Zustand "Bereitschaft" der Rückkopplungsunterdrückung 1 (53a) die sichere Trennung der Übertragungsrichtungen und muß daher unterdrückt werden.

Eine Unterdrückung des Störsignals wird dadurch erreicht, indem die log.1-Information am Ausgang (121) des ersten Inverters (115) erst um eine Zeit T1 verzögert zum zweiten Eingang (123) des zweiten UND-Gliedes (114) angeliefert wird. Die Zeit T1 bestimmt sich aus den Signallaufzeiten auf dem Einzel-Bussystem 1; sie muß so groß gewählt werden, daß während ihrer Laufzeit die Signale aus der vorhergehenden "Intern"-Operation sicher abklingen.

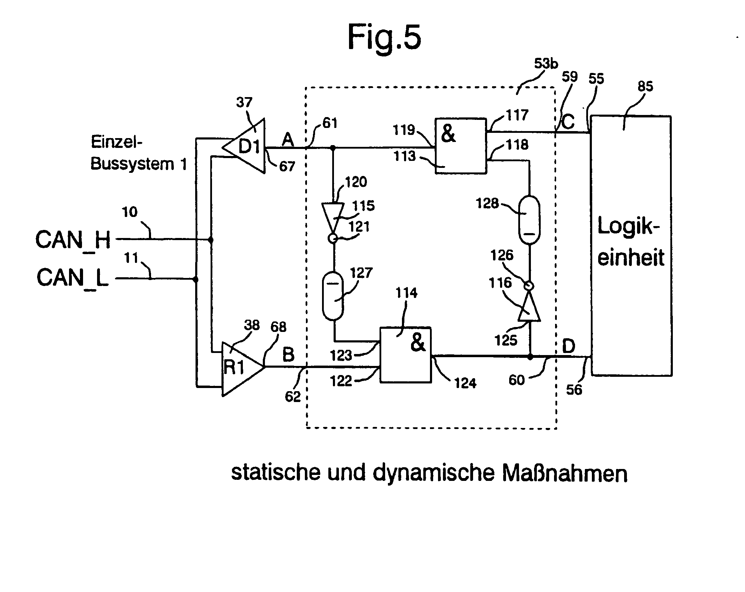

Fig. 5 zeigt die schaltungstechnische Realisierung dieser Verzögerung. Es wird die Verbindung zwischen dem Ausgang (121) des ersten Inverters (115) und dem zweiten Eingang (123) des zweiten UND-Gliedes (114) aufgetrennt und eine elektrische Baugruppe (127) vom Typ einer logischen 1-Verzögerungsschaltung dazwischen geschaltet. Art und Aufbau dieser Baugruppe (127) wurde im Zusammenhang in der Beschreibung der Abbildungen Fig. 6a bis Fig. 6c bereits erläutert.

Wie auch beim Übergang des Zustandes der Rückkopplungsunterdrückung 1 (53a) von "Intern" nach "Bereitschaft", so treten in gleicher Weise auch beim Übergang von "Extern" nach "Bereitschaft" kurze Überschneidungen von Signalen auf. In sinngemäß gleicher Weise wird in Fig. 4b der zweite Eingang (118) des ersten UND-Gliedes (113) praktisch zeitgleich mit dem Einnehmen des Zustandes "Bereitschaft" aus dem Zustand "Extern" auf log.1 gesetzt, ohne daß der log.1-Pegel am ersten Eingang (117) des ersten UND-Gliedes (113) [dieses Signal entspricht, wie erläutet, dem Signal "C" der Logikeinheit (85)] sich schon verändert hat. Auch hier muß das Entstehen eines Störsignals am Ausgang (119) des ersten UND-Gliedes (113) verhindert werden. Als Abhilfe wird entsprechend Fig. 5 zwischen dem Ausgang (126) des zweiten Inverters (116) und dem zweiten Eingang (118) des ersten UND-Gliedes (113) eine logische Verzögerungsschaltung (127) dazwischengeschaltet. Diese Verzögerungsschaltung verhindert, daß eine log.1 am zweiten Eingang (117) des ersten UND-Gliedes (113) erscheint, bevor das Signal "C" [dritter Ausgang der Logikeinheit (85) entsprechend Fig. 3] abgeklungen ist.

Fig. 5 zeigt die endgültige Rückkopplungsunterdrückung 1 (53b), bei der sowohl die statischen Maßnahmen nach Fig. 4a als auch die zuletzt beschriebenen dynamischen Maßnahmen zur Unterdrückung der Störsignale enthalten sind. Bei der Erprobung in der Praxis hat sich gezeigt, daß die Verzögerungszeit T1 der Verzögerungsschaltung (127) auf einen Wert im Bereich zwischen 100 ns und 200 ns einzustellen ist, während die Verzögerungszeit T2 der Verzögerungsschaltung (128) auf einen Wert im Bereich zwischen 50 ms und 100 ms einzustellen ist. Da die Verzögerungsschaltungen der Kompensation von Laufzeitverzögerungen dienen, sind die einzustellenden Verzögerungszeiten von diesen abhängig und damit von der Technologie der schaltungstechnischen Realisierung.

Zusammenfassend kann gesagt werden, daß unter Verwendung der beschriebenen Einrichtungen ein CAN-Controller (7) nach Fig. 1 einen Sternkoppler, bestehend aus beliebig vielen Einzel-Bussystemen, in der gleichen Weise betreibt, wie wenn er in einer Standard-CAN-Anwendung nur einen einzelnen CAN-Bus betreiben würde. Es findet eine Übertragung des logischen Zustandes der Datenleitung eines Einzel-Bussystems auf alle anderen angeschlossenen Einzel-Bussysteme statt. Die Arbitrierung wird unter Beibehaltung des Arbitrierungsmechanismus auf alle angeschlossenen Einzel-Bussysteme erweitert.

### Bezugszeichenliste

- (1): T-Treiber für Einzel-Bussysteme 1 und 2
- (2): T-Treiber für Einzel-Bussysteme 3 und 4
- (3): T-Treiber für Einzel-Bussysteme 5 und 6
- (4): log. ODER-Glied
- (5): log. ODER-Glied
- (6): log. ODER-Glied
- (7): CAN-Controller
- (8): siebter Eingang T-Treiber (1), Signal "Tx"
- (9): achter Ausgang T-Treiber (1), Signal "Rx"
- (10): erster Ein-/Ausgang T-Treiber (1)
- (11): zweiter Ein-/Ausgang T-Treiber (1)
- (12): dritter Ein-/Ausgang T-Treiber (1)
- (13): vierter Ein-/Ausgang T-Treiber (1)
- (14): erster Ein-/Ausgang T-Treiber (2)
- (15): zweiter Ein-/Ausgang T-Treiber (2)
- (16): dritter Ein-/Ausgang T-Treiber (2)
- (17): vierter Ein-/Ausgang T-Treiber (2)
- (18): erster Ein-/Ausgang T-Treiber (3)
- (19): zweiter Ein-/Ausgang T-Treiber (3)
- (20): dritter Ein-/Ausgang T-Treiber (3)
- (21): vierter Ein-/Ausgang T-Treiber (3)
- (22): Ausgang ODER-Glied (4)
- (23): Ausgang ODER-Glied (5)
- (24): Ausgang ODER-Glied (6)
- (25): fünfter Eingang T-Treiber (1), Signal "Text"
- (26): sechster Ausgang T-Treiber (1), Signal "Rint"
- (27): fünfter Eingang T-Treiber (2), Signal "Text"
- (28): sechster Ausgang T-Treiber (2), Signal "Rint"
- (29): fünfter Eingang T-Treiber (3), Signal "Text"
- (30): sechster Ausgang T-Treiber (3), Signal "Rint"
- (31): erster Eingang ODER-Glied (6)
- (32): zweiter Eingang ODER-Glied (6)
- (33): erster Eingang ODER-Glied (5)
- (34): zweiter Eingang ODER-Glied (5)
- (35): erster Eingang ODER-Glied (4)
- (36): zweiter Eingang ODER-Glied (4)
- (37): Bus-Treiber für Einzel-Bussystem 1
- (38): Bus-Empfänger für Einzel-Bussystem 1
- (39): Bus-Treiber für Einzel-Bussystem 2
- (40): Bus-Empfänger für Einzel-Bussystem 2
- (41): erster Ausgang des Bus-Treibers (37)
- (42): zweiter Ausgang des Bus-Treibers (37)
- (43): erster Ausgang des Bus-Treibers (39)
- (44): zweiter Ausgang des Bus-Treibers (39)
- (45): erster Eingang des Bus-Empfängers (38)
- (46): zweiter Eingang des Bus-Empfängers (38)
- (47): erster Eingang des Bus-Empfängers (40)
- (48): zweiter Eingang des Bus-Empfängers (40)
- (49): Steuereingang für Bus-Treiber (37)
- (50): Steuereingang für Bus-Empfänger (38)
- (51): Steuereingang für Bus-Treiber (39)
- (52): Steuereingang für Bus-Empfänger (40)
- (53): Rückkopplungsunterdrückung 1
- (53a): Rückkopplungsunterdrückung 1, statische Maßnahmen
- (53b): Rückkopplungsunterdrückung 1, statische und dynamische Maßnahmen
- (54): Rückkopplungsunterdrückung 2
- (54a): Rückkopplungsunterdrückung 2, statische Maßnahmen
- (54b): Rückkopplungsunterdrückung 2, statische und dynamische Maßnahmen
- (55): dritter Ausgang Logikeinheit (85), Signal "C"
- (56): dritter Eingang Logikeinheit (85), Signal "D"
- (57): vierter Ausgang Logikeinheit (85), Signal "E"
- (58): vierter Eingang Logikeinheit (85), Signal "F"
- (59): erster Eingang Rückkopplungsunterdrückung 1 (53), Signal "C"
- (60): erster Ausgang Rückkopplungsunterdrückung 1 (53), Signal "D"
- (61): zweiter Ausgang Rückkopplungsunterdrückung 1 (53), Signal "A"
- (62): zweiter Eingang Rückkopplungsunterdrückung 1 (53), Signal "B"
- (63): erster Eingang Rückkopplungsunterdrückung 2 (54), Signal "E"
- (64): erster Ausgang Rückkopplungsunterdrückung 2 (54), Signal "F"
- (65): zweiter Ausgang Rückkopplungsunterdrückung 2 (54), Signal "G"
- (66): zweiter Eingang Rückkopplungsunterdrückung 2 (54), Signal "H"
- (67): Eingang für Bus-Treiber (37), Signal "A"
- (68): Ausgang von Bus-Empfänger (38), Signal "B"
- (69): Eingang für Bus-Treiber (39), Signal "G"
- (70): Ausgang von Bus-Empfänger (40), Signal "H"
- (71): Fehlererkennung 1
- (72): Fehlererkennung 2
- (73): erster Eingang Fehlererkennung 1 (71)
- (74): zweiter Eingang Fehlererkennung 1 (71)
- (75): dritter Eingang Fehlererkennung 1 (71)
- (76): vierter Eingang Fehlererkennung 1 (71)
- (77): Fehler-Ausgang Fehlererkennung 1 (71)
- (78): erster Eingang Fehlererkennung 2 (72)
- (79): zweiter Eingang Fehlererkennung 2(72)
- (80): dritter Eingang Fehlererkennung 2 (72)
- (81): vierter Eingang Fehlererkennung 2 (72)
- (82): Fehler-Ausgang Fehlererkennung 2 (72)
- (83): gemeinsames Steuersignal für Bus-Treiber (37) und Bus-Empfänger (38)
- (84): gemeinsames Steuersignal für Bus-Treiber (39) und Bus-Empfänger (40)
- (85): Logikeinheit
- (86): erstes ODER-Glied der Logikeinheit (85)
- (87): zweites ODER-Glied der Logikeinheit (85)
- (88): drittes ODER-Glied der Logikeinheit (85)
- (89): viertes ODER-Glied der Logikeinheit (85)
- (90): erster Eingang ODER-Glied (86)
- (91): zweiter Eingang ODER-Glied (86)
- (92): dritter Eingang ODER-Glied (86)
- (93): Ausgang ODER-Glied (86)
- (94): erster Eingang ODER-Glied (87)
- (95): zweiter Eingang ODER-Glied (87)
- (96): dritter Eingang ODER-Glied (87)
- (97): vierter Eingang ODER-Glied (87)
- (98): Ausgang ODER-Glied (87)
- (99): erster Eingang ODER-Glied (88)
- (100): zweiter Eingang ODER-Glied (88)
- (101): dritter Eingang ODER-Glied (88)
- (102): Ausgang ODER-Glied (88)
- (103): erster Eingang ODER-Glied (89)
- (104): zweiter Eingang ODER-Glied (89)
- (105): dritter Eingang ODER-Glied (89)
- (106): Ausgang ODER-Glied (89)
- (107): Baugruppe log.1-Verzögerung
- (108): Eingang Baugruppe (107)
- (109): Ausgang Baugruppe (107)
- (110): Widerstand R in Baugruppe (107)
- (111): Diode D in Baugruppe (107)
- (112): Kondensator C in Baugruppe (107)
- (113): erstes UND-Glied in Rückkopplungsunterdrückung 1 (53a)
- (114): zweites UND-Glied in Rückkopplungsunterdrückung 1 (53a)
- (115): erster Inverter in Rückkopplungsunterdrückung 1 (53a)
- (116): zweiter Inverter in Rückkopplungsunterdrückung 1 (53a)
- (117): erster Eingang UND-Glied (113)
- (118): zweiter Eingang UND-Glied (113)
- (119): Ausgang UND-Glied (113)
- (120): Eingang Inverter (115)
- (121): Ausgang Inverter (115)
- (122): erster Eingang UND-Glied (114)
- (123): zweiter Eingang UND-Glied (114)
- (124): Ausgang UND-Glied (114)
- (125): Eingang Inverter (116)
- (126): Ausgang Inverter (116)
- (127): erste Baugruppe log.1-Verzögerung in Rückkopplungsunterdrückung 1 (53b)
- (128): zweite Baugruppe log.1-Verzögerung in Rückkopplungsunterdrückung 1 (53b)

## Patentansprüche

1. Stemkoppler, der mindestens zwei Einzel-Bussysteme derart zu einem gesamten Bussystem miteinander verbindet, dass eine Arbitrierung unter Einbeziehung aller angeschlossenen Einzel-Bussysteme stattfindet, wobei die Einzel-Bussysteme nach dem Carrier-Sense-Multiple-Access-Zugriffsverfahren (CSMA) mit bitweiser Arbitrierung ausgebildet sind, wobei jedes der Einzel-Bussysteme einen dominanten Pegel und einen rezessiven Pegel einnehmen kann und immer alle Einzel-Bussysteme den dominanten Pegel annehmen, wenn der dominante Pegel auf irgendeinen der Einzel-Bussysteme herbeigeführt wird, und für jedes der Einzel-Bussysteme eine Rückkopplungsunterdrückung (53, 54) des dominanten Pegels vorgesehen ist, wobei die Rückkopplungsunterdrückung (53, 54) eines jeweiligen Einzel-Bussystems Logik-Schaltelemente (113, 114) aufweist, die nur eine Qbertragungsrichtung des dominanten Pegels zwischen dem jeweiligen Einzel-Bussystem und den anderen Einzel-Bussystemen zulassen.

2. Sternkoppler nach Anspruch 1, **dadurch gekennzeichnet, dass** die Mittel zur Unterdrückung der Rückkopplung aus statischen (113, 114) und dynamischen (127, 128) Unterdrückungsmaßnahmen bestehen.

3. Sternkoppler nach Anspruch 2, **dadurch gekennzeichnet, dass** zur Realisierung der statischen Unterdrückungsmaßnahmen eine Einrichtung (113, 114) vorgesehen ist, die sicherstellt, dass nur eine Übertragungsrichtung des dominanten Pegels zwischen dem jeweiligen Einzel-Bussystem und den anderen Einzel-Bussystemen zugelassen ist.

4. Sternkoppler nach wenigstens einem der vorhergehenden Ansprüche, **dadurch gekennzeichnet, dass** eines der Einzel-Bussysteme aus einer Schnittstelle (8, 9) zu einem Bus-Controller besteht.

5. Sternkoppler nach wenigstens einem der vorhergehenden Ansprüche,**dadurch gekennzeichnet,dass** ein CAN-Controller (7) zur Steuerung des Datenverkehrs für die beiden verbundenen Einzel-Bussysteme daran anschließbar ist.

6. Sternkoppler nach wenigstens einem der vorstehenden Ansprüche,**dadurch gekennzeichnet, dass** so ausgebildete Mittel (49, 50, 51, 92) zur Abschaltung wenigstens eines Einzel-Bussystems vorgesehen sind, dass durch die Abschaltung eines Einzel-Bussystems der Datenverkehr zwischen den anderen Einzel-Bussystemen nicht beeinträchtigt wird.

7. Sternkoppler nach Anspruch 6, **dadurch gekennzeichnet, dass** als Mittel(49, 50, 51, 52) zur Abschaltung eines Einzel-Bussystems eine Einrichtung vorgesehen ist, die zur Abschaltung der dem abzuschaltenden Einzel-Bussystem zugeordneten Sendeeinheit (37, 39) der Koppeleinrichtung dient und die zur Sperrung der dem abzuschaltenden Einzel-Bussystem zugeordneten Empfangseinheit (38, 40) der Koppeleinrichtung dient

8. Sternkoppler nach wenigstens einem der vorherigen Ansprüche,**dadurch gekennzeichnet, dass** eine Einrichtung (71, 72) zur Erkennung von dauerhaften Fehlern auf den Einzel-Bussystemen vorgesehen ist.

9. Sternkoppler nach Anspruch 8, **dadurch gekennzeichnet, dass** die Einrichtung zur Erkennung (71, 72) von dauerhaften Fehlern so ausgebildet ist, dass sie einen außerhalb eines zulässigen Bereichs liegenden physikalischen Pegel auf dem Übertragungsmedium sensiert und/oder das Ausbleiben von zu erwartenden Daten an der Empfangseinheit (38, 40) feststellt.

10. Sternkoppler nach einem der Ansprüche 8 oder 9, **dadurch gekennzeichnet, dass** Mittel zur Abschaltung eines Einzel-Bussystems aufgrund eines dauerhaften Fehlers vorgesehen sind.

## Claims

1. Star coupler which connects at least two individual bus systems to one another to form an overall bus system such that arbitration takes place with the involvement of all the connected individual bus systems, wherein the individual bus systems are formed on the basis of the Carrier Sense Multiple Access (CSMA) method of access with bit-by-bit arbitration, wherein each of the individual bus systems can adopt a dominant level and a recessive level and all the individual bus systems always assume the dominant level when the dominant level is brought about on any of the individual bus systems, and feedback rejection (53, 54) of the dominant level is provided for each of the individual bus systems, wherein the feedback rejection (53, 54) of a respective individual bus system has logic switching elements (113, 114) which permit only one direction of transmission for the dominant level between the respective individual bus system and the other individual bus systems.

2. Star coupler according to Claim 1, **characterized in that** the means for rejecting the feedback comprise static (113, 114) and dynamic (127, 128) rejection measures.

3. Star coupler according to Claim 2, **characterized in that** the static rejection measures are implemented by providing a device (113, 114) which ensures that only one direction of transmission for the dominant level is permitted between the respective individual bus system and the other individual bus systems.

4. Star coupler according to at least one of the preceding claims, **characterized in that** one of the individual bus systems comprises an interface (8, 9) to a bus controller.

5. Star coupler according to at least one of the preceding claims, **characterized in that** a CAN controller (7) for controlling the data traffic for the two connected individual bus systems can be connected to the latter.

6. Star coupler according to at least one of the preceding claims, **characterized in that** means (49, 50, 51, 52) for disconnecting at least one individual bus system are provided which are in a form such that the disconnection of an individual bus system does not adversely affect the data traffic between the other individual bus systems.

7. Star coupler according to Claim 6, **characterized in that** the means (49, 50, 51, 52) provided for disconnecting an individual bus system are a device which is used to disconnect that transmission unit (37, 39) of the coupling device that is associated with the individual bus system to be disconnected and which is used to disable that reception unit (38, 40) of the coupling device that is associated with the individual bus system to be disconnected.

8. Star coupler according to at least one of the preceding claims, **characterized in that** a device (71, 72) for recognizing permanent errors on the individual bus systems is provided.

9. Star coupler according to Claim 8, **characterized in that** the device for recognizing (71, 72) permanent errors is in a form such that it senses a physical level situated outside an admissible range on the transmission medium and/or detects the absence of data to be expected on the reception unit (38, 40).

10. Star coupler according to either of Claims 8 and 9, **characterized in that** means for disconnecting an individual bus system on account of a permanent error are provided.

## Revendications

1. Coupleur en étoile, lequel relie au moins deux systèmes de bus indépendants en un système de bus global de telle sorte qu'il se produit un arbitrage en faisant intervenir tous les systèmes de bus indépendants connectés, les systèmes de bus indépendants étant configurés selon le procédé d'accès multiple avec détection de porteuse (CSMA) avec arbitrage bit par bit, chacun des systèmes de bus indépendants pouvant adopter un niveau dominant et un niveau récessif et tous les systèmes de bus indépendants acceptent toujours le niveau dominant lorsque le niveau dominant est causé à l'un quelconque des systèmes de bus indépendants, et une inhibition de la rétroaction (53, 54) du niveau dominant est prévue pour chacun des systèmes de bus indépendants, l'inhibition de la rétroaction (53, 54) d'un système de bus indépendant respectif présentant des éléments de commutation logiques (113, 114) qui n'autorisent qu'un seul sens de transmission du niveau dominant entre le système de bus indépendant respectif et les autres systèmes de bus indépendants.

2. Coupleur en étoile selon la revendication 1, **caractérisé en ce que** les moyens d'inhibition de la rétroaction se composent de dispositions d'inhibition statiques (113, 114) et dynamiques (127, 128).

3. Coupleur en étoile selon la revendication 2, **caractérisé en ce que** pour réaliser les dispositions d'inhibition statiques, il est prévu un dispositif (113, 114) qui garantit qu'un seul sens de transmission du niveau dominant est autorisé entre le système de bus indépendant respectif et les autres systèmes de bus indépendants.

4. Coupleur en étoile selon l'une des revendications précédentes, **caractérisé en ce que** l'un des systèmes de bus indépendants se compose d'une interface (8, 9) vers un contrôleur de bus.

5. Coupleur en étoile selon au moins l'une des revendications précédentes, **caractérisé en ce qu'**un contrôleur CAN (7) pour commander le trafic de données pour les deux systèmes de bus indépendants reliés peut être raccordé à ceux-ci.

6. Coupleur en étoile selon au moins l'une des revendications précédentes, **caractérisé en ce que** des moyens (49, 50, 51, 52) configurés pour mettre hors circuit au moins un système de bus indépendant sont prévus de telle sorte que la mise hors circuit d'un système de bus indépendant n'affecte pas le trafic de donnés entre les autres systèmes de bus indépendants.

7. Coupleur en étoile selon la revendication 6, **caractérisé en ce qu'**un dispositif est prévu en tant que moyens (49, 50, 51, 52) pour mettre hors circuit un système de bus indépendant, lequel sert à mettre hors circuit l'unité d'émission (37, 39) du dispositif de connexion associée au système de bus indépendant à mettre hors circuit et lequel sert à bloquer l'unité de réception (38, 40) du dispositif de connexion associée au système de bus indépendant à mettre hors circuit.

8. Coupleur en étoile selon au moins l'une des revendications précédentes, **caractérisé en ce qu'**il est prévu un dispositif (71, 72) pour détecter des défauts permanents sur les systèmes de bus indépendants.

9. Coupleur en étoile selon la revendication 8, **caractérisé en ce que** le dispositif (71, 72) pour détecter les défauts permanents est configuré de telle sorte qu'il détecte un niveau physique sur le support de transmission qui se trouve en-dehors d'une plage autorisée et/ou constate l'absence de données à attendre sur l'unité de réception (38, 40).

10. Coupleur en étoile selon l'une des revendications 8 ou 9, **caractérisé en ce que** sont prévus des moyens pour mettre hors circuit un système de bus indépendant en raison d'un défaut permanent.
